(19) Europäisches Patentamt
European Patent Office
Office européen des brevets

(11) EP 4 574 898 A1

(12) EUROPEAN PATENT APPLICATION

(43) Date of publication:
**25.06.2025 Bulletin 2025/26**

(21) Application number: **23219802.8**

(22) Date of filing: **22.12.2023**

(51) International Patent Classification (IPC):
***C08L 35/00*** $^{(2006.01)}$ ***C08F 8/32*** $^{(2006.01)}$
***C08F 8/34*** $^{(2006.01)}$

(52) Cooperative Patent Classification (CPC):
(C-Sets available)
**C08L 35/00; C08F 8/32; C08F 8/34** (Cont.)

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Belenos Clean Power Holding AG**
**2502 Bienne (CH)**

(72) Inventors:
- **MARTINEZ-IBANEZ, Maria**
  **01009 Vitoria-Gasteiz (ES)**
- **ARMAND, Michel**
  **75014 Paris (FR)**
- **SANTIAGO SANCHEZ, Alexander**
  **01200 Salvatierra/Agurain (ES)**
- **FRAILE INSAGURBE, David**
  **01010 Vitoria-Gasteiz (ES)**
- **SANCHEZ DIEZ, Eduordo**
  **48940 Leioa (ES)**
- **ALDALUR CEBERIO, Itziar**
  **20001 Donostia (ES)**
- **ZUGAZUA GANADO, Oihane**
  **01010 Vitoria-Gasteiz (ES)**
- **PORCARELLI, Luca**
  **4052 Basel (CH)**
- **PEREGO, Daniele**
  **5400 Baden (CH)**

(74) Representative: **ICB SA**
**Faubourg de l'Hôpital, 3**
**2001 Neuchâtel (CH)**

(54) **POLYMER ELECTROLYTES AND METHODS TO PRODUCE THEM**

(57) The present invention relates to a polymer electrolyte for a battery cell comprising a polymaleimide copolymer comprising i) first polymaleimide repeat units according $R^3(Q)_\mu$, wherein $R^3$, individually, is $C(H)_h(C_xH_{2x+1})_i((CH_2)_\psi)_j(CH_2OC(O)(CH_2)_\sigma)_k$ or a polyether, wherein i is between 0 and 2; j and k, individually, are between 0 and 4; h is 4 - i - j - k; the sum of h and i is between 0 and 2; x is between 1 and 6; $\psi$ is between 1 and 10; and $\sigma$ is between 1 and 20; $\mu$, individually, is at least 2; Q, individually, is according to formula (I):

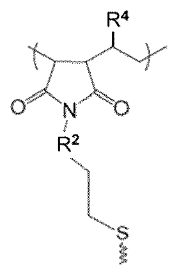

Formula I,

wherein $R^2$, individually, is $C_1$-$C_{16}$ alkyl, $C_2$-$C_{16}$ alkenyl, $C_2$-$C_{16}$ alkynyl or aryl; $R^4$, individually, is H, $C_1$-$C_{16}$ alkyl, $C_2$-$C_{16}$ alkenyl, $C_2$-$C_{16}$ alkynyl; Q is covalently bound to $R^3$ via the sulphur atom of Q; ii) second polymaleimide repeat units according to formula (II)

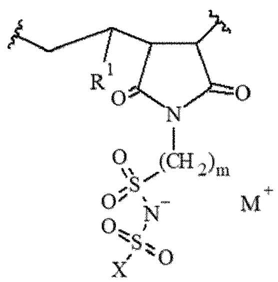

Formula II,

wherein $R^1$, individually, is H, $C_1$-$C_{16}$ alkyl, $C_2$-$C_{16}$ alkenyl, $C_2$-$C_{16}$ alkynyl; m, individually, is 1 to 5; $M^+$ is independently an alkali metal ion; X, individually, is H, F, $C_1$-$C_{16}$ alkyl, $C_1$-$C_{16}$ fluoroalkyl; wherein the first polymaleimide repeat units and the second polymaleimide repeat units are covalently bonded to one another.

EP 4 574 898 A1

Fig. 2A

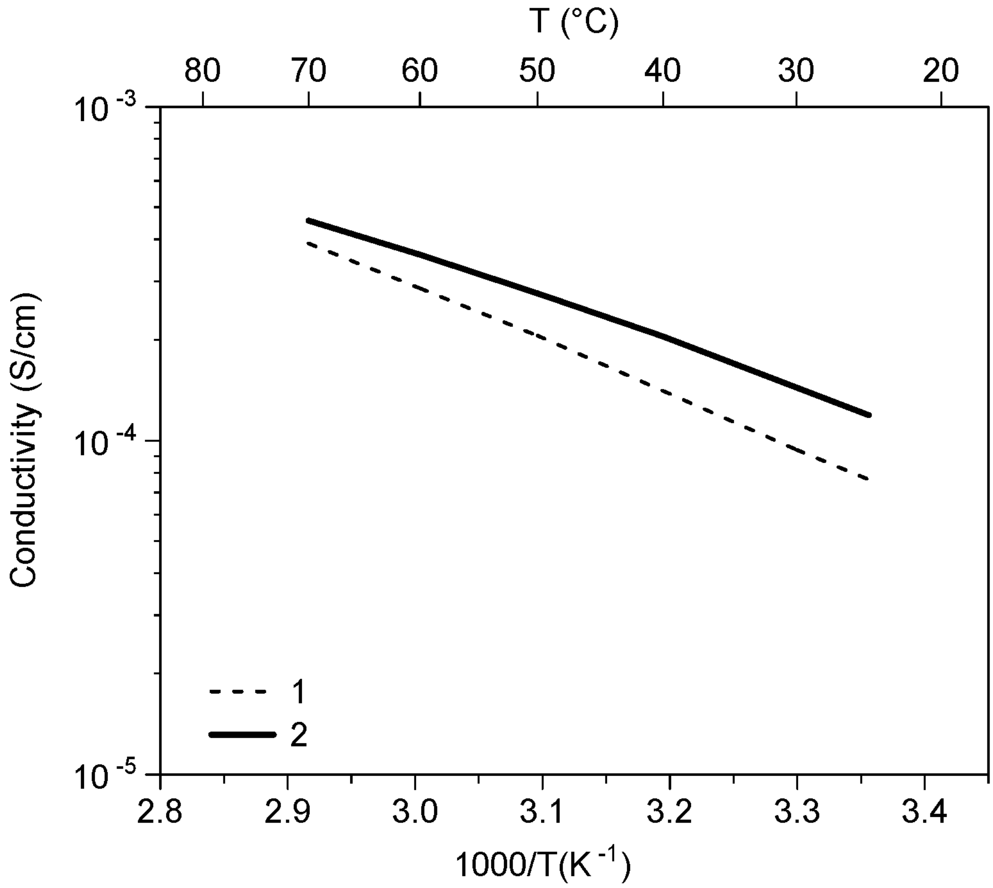


(52) Cooperative Patent Classification (CPC): (Cont.)

C-Sets
**C08K 5/0016, C08L 35/00;**
C08F 222/408, C08F 222/402

## Description

Technical field of the invention

The present invention relates to a polymer electrolyte, in particular a solid state electrolyte. The present invention further relates to battery cells comprising the polymer electrolyte and to methods of producing the polymer electrolyte.

Background

The importance of batteries and other energy storage devices is growing rapidly. The rise of e-mobility, in particular electronically driven automobiles and e-scooters, requires batteries with high capacity and a reasonable weight.

Current research in battery technology evolves around new materials to improve the safety of batteries as well as increasing and optimizing the volumetric energy density and the gravimetric energy density.

Conventional liquid electrolytes, such as for lithium batteries, are based on mixture of organic solvents and lithium salts. These electrolytes have high ionic conductivity and are electrochemically stable inside the voltage window of the battery. However, such liquid electrolytes are highly flammable, volatile and can leak outside the battery casing. These disadvantages can lead to a critical failure of the battery, fire and explosions.

Recently, in order to improve the safety of alkali metal batteries and alkaline earth metal batteries, solid electrolytes, polymer electrolytes (e.g. gel (polymer) electrolytes) and ionic liquid electrolytes, have been developed.

Gel polymer electrolytes are systems in which a liquid electrolyte is encapsulated and impregnated in a, typically chemically, cross-linked polymer structure. This type of electrolytes provides a relatively high ion conductivity at a reasonable price, and also have a high structural, thermal, and mechanical stability over time. However, the ion conductivity is still lower than that of liquid electrolytes, because the cross-linked polymer structure tends to hinder the movement of the metal ions, e.g. lithium ions for lithium ion batteries.

WO2022/055307 discloses a gel polymer electrolyte for lithium secondary batteries, obtained from a precursor composition comprising two cross-linking agents, one thereof comprising at least two thiol functional groups, a lithium salt and a small amount of an organic solvent.

US2023096123 discloses a solid polymer electrolyte comprising a cross-linked polymer network. The cross-linked polymer network comprises cross-linked groups, such as difunctional polyether groups and/or difunctional ionic groups, and cross-linked multifunctional crosslinker groups, and at least one cross-linking group comprising a thioether group. For the solid polymer electrolyte to be conductive, it must further comprise a dual-ion conductive salt (e.g. a metal salt), tethered ionic groups, and/or a liquid electrolyte.

A disadvantage of the foregoing electrolyte is that the polyether groups are unstable at a high voltage (e.g. 4 V and above). A further disadvantage is the risk of polarization in the battery cell comprising these electrolytes, due to the use of a dual-ion conducting salt and ascribed to a low lithium transference number of the electrolyte. Polarization, as is known, reduces the power density of the battery cell, thereby limiting the current value that can be used for charging and discharging the battery cell. In other words, polarization in a battery cell leads to battery cells having a performance that decreases rapidly with each charging and discharging cycle.

Summary of the invention

It is an aim of the present invention to overcome one or more of the foregoing drawbacks. It is an aim of the present invention to provide a polymer electrolyte having a high ionic conductivity, in particular to lithium ions. A further aim is to provide a polymer electrolyte having a high structural, electrochemical, thermal and mechanical stability over time. A further aim is to provide a polymer electrolyte which is substantially free from any processing solvent. A further aim is to provide a polymer electrolyte for a battery cell which reduces the risk of polarizations in the battery cell, thereby improving the current value that can be used with the battery cell, as well as providing a battery cell having a longer lifetime at high performance (i.e. the reduction of performance is significantly reduced to even avoided), in particular upon repeated charging/discharging cycles.

It is a further aim to provide methods of producing such a polymer electrolyte with high ionic conductivity, high voltage stability up to at least 4 V, and thermal and mechanical stability.

According to a first aspect of the present disclosure, there is provided a polymer electrolyte for a battery cell as set out in the appended claims. The polymer electrolyte comprises or substantially consists of a polymaleimide copolymer. The polymaleimide copolymer comprises or substantially consists of first polymaleimide repeat units and second polymaleimide repeat units, wherein the first polymaleimide repeat units and the second polymaleimide repeat units are covalently bonded to one another.

The first polymaleimide repeat units are according to $R^3(Q)_\mu$. $\mu$, individually, is at least 2, preferably between 2 and 4. Q, individually, is according to formula (I):

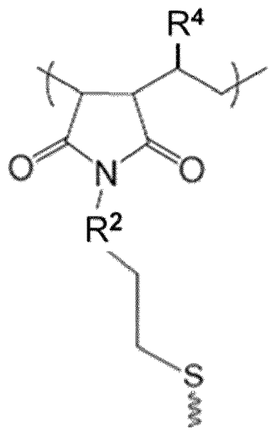

Formula I,

wherein Q is covalently bound to $R^3$ via the sulphur atom of Q,

$R^2$, individually, is $C_1$-$C_{16}$ alkyl, $C_2$-$C_{16}$ alkenyl, $C_2$-$C_{16}$ alkynyl or aryl, and

$R^4$, individually, is H, $C_1$-$C_{16}$ alkyl, $C_2$-$C_{16}$ alkenyl, $C_2$-$C_{16}$ alkynyl.

Advantageously, $R^2$ is methyl, ethyl, propyl, n-butyl, iso-butyl, benzyl or styryl.

Advantageously, $R^4$ is H, methyl, ethyl or propyl.

$R^3$, individually, is $C(H)_h(C_xH_{2x+1})_i((CH_2)_\psi)_j(CH_2OC(O)(CH_2)_\sigma)_k$ or a polyether, wherein i is between 0 and 2; j and k, individually, are between 0 and 4; h is 4 - i - j - k; the sum of h and i is between 0 and 2; x is between 1 and 6 ; $\psi$ is between 1 and 10; and $\sigma$ is between 1 and 20.

Advantageously, when $R^3$ is a polyether, the polyether is according to $-(CH_2)_\omega(O(CH_2)\varsigma)_\alpha-$, wherein $\omega$ is between 0 and 4, $\varsigma$ is between 1 and 4, and $\alpha$ is between 1 and 10, preferably between 1 and 5.

Alternatively, yet advantageously, $R^3$ is $-(CH_2)_\beta-$, wherein $\beta$ is between 1 and 20 (i.e. h is 2, i is 0, j is 2, k is 0). Yet alternatively and advantageously, $R^3$ is $C(CH_2CH_3)(CH_2OC(O)(CH_2)_\sigma)_3-$ (i.e. h is 0, i is 1, j is 0 and k is 3). Yet alternatively and advantageously, $R^3$ is $C(CH_2OC(O)(CH_2)\sigma)_4-$(i.e. h is 0, i is 0, j is 0 and k is 4).

The second polymaleimide repeat units are according to formula (II) :

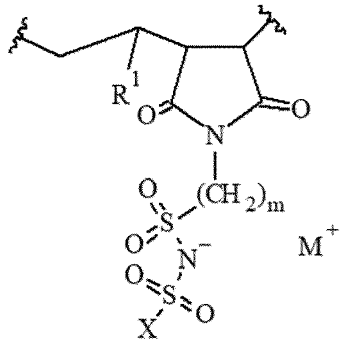

Formula II,

wherein

$R^1$, individually, is H, $C_1$-$C_{16}$ alkyl, $C_2$-$C_{16}$ alkenyl, $C_2$-$C_{16}$ alkynyl;

m, individually, is 1 to 5;

$M^+$ is independently an alkali metal ion; and

X, individually, is H, F, $C_1$-$C_{16}$ alkyl, $C_1$-$C_{16}$ fluoroalkyl.

Advantageously, $R^1$ is H, methyl, ethyl or propyl.

Advantageously, X is $CF_3$, $CH_3$ or F.

Advantageously, the alkali metal is lithium, sodium or potassium, preferably lithium. In other words, the alkali metal ion advantageously is a lithium ion ($Li^+$), a sodium ion ($Na^+$), or a potassium ion ($K^+$), preferably a lithium ion.

Advantageously, the molar ratio of the first polymaleimide repeat units to the second polymaleimide repeat units is between 5 and 95, preferably between 10 and 70, more preferably between 20 and 50. The inventors have discovered that when the molar ratio of the first polymaleimide polymer to the second polymaleimide polymer is between 5 and 95, the polymer electrolyte has an excellent ionic conductivity in combination with optimal mechanical properties.

The polymer electrolyte can further comprise a plasticizing agent. Advantageously, the polymer electrolyte comprises between 0 % and 90 % by weight of a plasticizing agent, preferably between 0 % and 80 %, based on the total weight of the polymer electrolyte. Advantageously, when the polymer electrolyte comprises a plasticizing agent, it comprises between 0.5 % and 90 % by weight of the plasticizing agent, such as between 5 % and 85 % by weight, preferably between 10 % and 85 % by weight, for example between 20 % and 80% by weight, more preferably between 45 % and 75 % by weight, based on the total weight of the polymer electrolyte.

Advantageously, the plasticizing agent is selected from the group consisting of linear carbonates, cyclic carbonates, ethers, and nitriles. Preferably, the plasticizing agent is a linear carbonate or a cyclic carbonate. Particularly preferred example of the plasticizing agent are propylene carbonate and ethylene carbonate. The polymer electrolyte can comprise two or more plasticizing agents, which are individually selected from the group consisting of linear carbonates, cyclic carbonates, ethers, and nitriles.

According to a second aspect of the present disclosure, there is provided a battery cell as set out in the appended claims.

The battery cell comprises the polymer electrolyte according to the first aspect of the present disclosure. Advantageously, the battery cell is a secondary battery cell. Advantageously, the battery cell is a lithium metal battery cell.

According to a third aspect of the present disclosure, there is provided a method for producing a polymer electrolyte for a battery cell as set out in the appended claims. The polymer electrolyte comprises or substantially consists of a polymaleimide copolymer. Advantageously, the polymer electrolyte produced by the methods of the third aspect of the present disclosure is a polymer electrolyte according to the first aspect of the present disclosure.

The method comprises a step of preparing a compound comprising third polymaleimide repeat units, second polymaleimide repeat units, a free radical initiator and a thiol-ene reaction agent. The third polymaleimide repeat units and the second polymaleimide repeat units are covalently bonded to one another, i.e. they are present in the compound as a copolymer. In other words, the compound comprises a copolymer comprising third and second polymaleimide repeat units.

The third polymaleimide repeat units are according to formula (III):

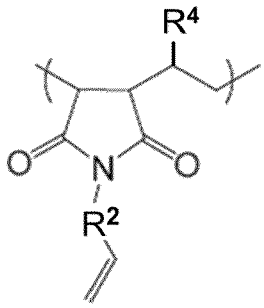

Formula III,

wherein $R^2$ and $R^4$ are as described hereinabove.

The second polymaleimide repeat units are according to formula (II).

The thiol-ene reaction agent comprises thiol groups. The number of thiol groups, *q*, is at least two, such as two, three, four or more.

With a "thiol group" is meant in the present disclosure a functional group -SH, i.e. a sulphur atom covalently bond to a hydrogen atom.

The number of third polymaleimide repeating units, *n,* the number of thiol groups, *q*, and the number of thiol-ene reaction agent molecules, *a*, are selected so that $0.5 \leq \frac{a*q}{n} \leq 2$, preferably $0.75 \leq \frac{a*q}{n} \leq 1.5$, more preferably $0.9 \leq \frac{a*q}{n} \leq 1.1$, such as about 1.

Optionally, the compound further comprises a processing solvent. The term "processing solvent" is used in the

present disclosure for solvents that are used during the manufacturing of the polymer electrolyte but are not present therein. Advantageously, the optional processing solvent comprises or substantially consists of acetone, dimethylformamide, dimethyl sulfoxide, N-Methyl-2-pyrrolidone, or a combination of two or more thereof.

The inventors have surprisingly discovered that the compound allows handling thereof, such as application to a substrate, without the need for a processing solvent to obtain a favourable viscosity and handling characteristics, thereby rendering the presence of a processing solvent in the compound surprisingly optional.

Optionally, the compound further comprises a plasticizing agent. The optional plasticizing agent is as described hereinabove. Advantageously, the compound comprises between 0.5 % and 90 % by weight of the plasticizing agent, such as between 5 % and 85 % by weight, between 10 % and 85 % by weight, preferably between 20 % and 80 % by weight, such as between 45 % and 60 % by weight, based on the total weight of the compound minus the weight of the optional processing solvent.

In the present disclosure, the term "the total weight of the compound minus the weight of the optional processing solvent" is used for the weight of the compound as such when the compound does not comprise a processing solvent, and for the weight of the compound without taking into account the weight of the processing solvent when the compound comprises a processing solvent.

Advantageously, the free radical initiator is capable of initiating a thiol-ene reaction between the third polymaleimide repeat units and the thiol-ene reaction agent. Advantageously, upon initiation, sulphur-carbon covalent bonds are formed between the third polymaleimide repeat unit and the thiol-ene reaction agent, leading to a thio-ether linkage.

Advantageously, the compound comprises between 0.05 % and 1.5 % by weight of the free radical initiator, preferably between 0.075 % and 1.4 % by weight, more preferably between 0.1 % and 1.25 % by weight, based on the total weight of the compound minus the weight of the optional processing solvent.

Advantageously, the compound comprises between 0 % and 95 % by weight of the processing solvent, such as between 1 % and 95 % by weight, between 5 % and 92.5 % by weight, preferably between 10 % and 90 % by weight, more preferably between 20 % and 90 % by weight, such as between 50 % and 90 % by weight, based on the total weight of the compound including the weight of the processing solvent.

In the present disclosure, the term "total weight of the compound including the weight of the processing solvent" is used for the weight of the compound as such when the compound does not comprise a processing solvent (0 % by weight of processing solvent in the compound), and for the weight of all components of the compound, including the processing solvent, when the compound comprises a processing solvent.

Advantageously, the compound comprises between 30 % and 80 % by weight of plasticizing agent, between 15 % and 70 % by weight of the compound and between 0.05 % and 1.5 % by weight of the free radical initiator, based on the total weight of the compound minus the weight of the optional processing solvent.

The method further comprises applying the compound to a substrate. The substrate can be any substrate, such as a Teflon sheet or glass, and can also be the anode or the cathode of a battery cell. The application of the compound to the substrate can be done by means known in the art, for example, without being limited thereto, casting, pressing, which can be hot pressing or cold pressing, and application without applying any pressure, such as by means of a spatula. Advantageously, upon applying the compound to the substrate, a film of compound is obtained.

When the compound comprises a processing solvent, the method further comprises removal of thereof, thereby obtaining a substantially processing solvent-free compound.

The method further comprises exposing the (substantially processing solvent-free) compound to one or more of UV radiation, IR radiation or a temperature up to 100 °C. Upon exposure to one or more of UV radiation, IR radiation or a temperature up to 100 °C, a thiol-ene reaction of the (substantially processing solvent-free) compound, in particular of the thiol-ene reaction agent and the third polymaleimide repeat units, is initiated, thereby obtaining the polymer electrolyte.

Advantageously, the thiol-ene reaction allows cross-linking of the compound, in particular of the third polymaleimide repeat units, thereby obtaining the polymer electrolyte. In particular, a film or sheet of polymer electrolyte is obtained on the substrate.

Advantages of the methods of the invention include the possibility to reduce or eliminate the use of a processing solvent, which renders the methods more environmentally friendly.

Advantages of the presence of the second polymaleimide repeat units and the optional plasticizing agent in the polymer electrolyte of the present disclosure include a high ionic conductivity and a high stability over time. Advantages of the presence of the first polymaleimide repeat units in the polymer electrolyte of the present disclosure include a high thermal, structural and mechanical stability over time. Advantages of the polymer electrolyte of the present disclosure in general is the capability to resist high voltages, allowing the use in combination with active materials operating at high voltages.

Advantages of the battery cells of the invention, i.e. battery cells comprising the polymer electrolyte of the invention, include a high ionic conductivity, and an excellent resistance against repeated charging/discharging, thereby having an excellent lifetime.

Description of the figures

Aspects of the invention will now be described in more detail with reference to the appended drawings, wherein same reference numerals illustrate same features and wherein:

- Figure 1 shows a polymer electrolyte membrane of the invention;
- Figure 2A shows the ionic conductivity for 2 polymer electrolytes of the invention at varying temperatures;
- Figures 2B shows the ionic conductivity for a reference polymer electrolyte at varying temperatures;
- Figure 2C shows the ionic conductivity for 4 further reference polymer electrolytes at varying temperatures;
- Figure 3 shows the thermogravimetric analysis (TGA) for 2 polymer electrolytes of the invention;
- Figures 4A and 4B show the current density in function of the potential for coin cells comprising a polymer electrolyte of the invention;
- Figures 5A and 5B show the voltage in function of the capacity at 40 °C for coin cells comprising a polymer electrolyte of the invention;
- Figures 6A and 6B show the voltage as measured during repeated charging/discharging cycles over time for 2 polymer electrolytes of the invention; and
- Figure 7 shows the discharge capacity and Coulombic efficiency at 40 °C of a LFP-based lithium metal battery cell comprising a polymer electrolyte of the invention.

Detailed description of the invention

The polymer electrolyte comprises or substantially consists of a polymaleimide copolymer. The polymaleimide copolymer according to the present disclosure advantageously comprises first polymaleimide repeat units, second polymaleimide repeat units, and optionally a plasticizing agent. The first polymaleimide repeat units and the second polymaleimide repeat units are covalently bonded to one another, preferably via a carbon-carbon bond.
The first polymaleimide repeat units are according to $R^3(Q)_\mu$.
$\mu$, individually, is at least 2, preferably between 2 and 4.
Q, individually, is according to formula (I):

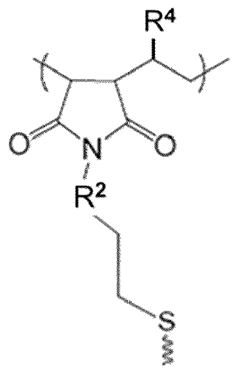

Formula I.

Advantageously, $R^2$, individually, is $C_1$-$C_{16}$ alkyl, preferably $C_1$-$C_{10}$ alkyl, more preferably $C_1$-$C_8$ alkyl, most preferably $C_1$-$C_6$ alkyl, such as methyl, ethyl, propyl and butyl. $R^2$ can be linear or branched.
Alternatively or additionally, yet advantageously, $R^2$, individually, is $C_2$-$C_{16}$ alkenyl, comprising one or more C=C bonds, preferably $C_2$-$C_{10}$ alkenyl, more preferably $C_2$-$C_8$ alkenyl, most preferably $C_2$-$C_6$ alkenyl. $R^2$ can be linear or branched.
Alternatively or additionally, yet advantageously, $R^2$, individually, is $C_2$-$C_{16}$ alkynyl, comprising one or more C=C bonds, preferably $C_2$-$C_{10}$ alkynyl, more preferably $C_2$-$C_8$ alkynyl, most preferably $C_2$-$C_6$ alkynyl. $R^2$ can be linear or branched.

Alternatively or additionally, yet advantageously, $R^2$, individually, is aryl, such as benzyl or phenyl.

Advantageously, $R^4$ is H, $C_1$-$C_{16}$ alkyl, $C_2$-$C_{16}$ alkenyl or $C_2$-$C_{16}$ alkynyl, preferably H, $C_1$-$C_6$ alkyl, $C_2$-$C_6$ alkenyl or $C_2$-$C_6$ alkynyl, most preferably H, $C_1$-$C_4$ alkyl, $C_2$-$C_4$ alkenyl or $C_2$-$C_4$ alkynyl. The alkyl, alkenyl and alkynyl can each be linear or branched.

A preferred example of the Q is

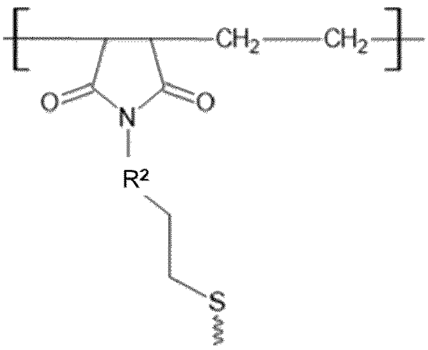
,

wherein $R^4$ is H.

Advantageously, Q is covalently bound to $R^3$ via the sulphur atom of Q.

Advantageously, $R^3$, individually, is a polyether. With "individually" is meant that the first polymaleimide repeat units can be different from one another, by comprising, for example, a different $R^3$. Advantageously, $R^3$ is a polyether according to $-(CH_2)_\omega(O(CH_2)_\varsigma)_\alpha-$, wherein $\omega$ is between 0 and 6, preferably between 0 and 4, more preferably between 1 and 4, $\varsigma$ is between 1 and 4, preferably between 1 and 3, such as 2, and $\alpha$ is between 1 and 10, preferably between 1 and 5, more preferably between 2 and 4.

For example, $R^3$ is $-(CH_2)_2(O(CH_2)_2)_\alpha-$, (i.e. $\omega$ is 2, $\varsigma$ is 2), such as $-(CH_2)_2(O(CH_2)_2)_2-$ (i.e. $\alpha$ is 2) or $-(CH_2)_2(O(CH_2)_2)_3-$ (i.e. $\alpha$ is 3).

Alternatively or additionally, yet advantageously, $R^3$, individually, is according to $C(H)_h(C_xH_{2x+1})_i((CH2)_\psi)_j(CH_2OC(O)(CH_2)_\sigma)_k$. Advantageously, x is between 1 and 6, preferably between 1 and 4, more preferably 1 or 2. Advantageously, $\psi$ is between 1 and 10, preferably between 1 and 8, more preferably between 1 and 6, such as between 1 and 4. Advantageously, $\sigma$ is between 1 and 20, preferably between 1 and 10, such as between 1 and 6, more preferably between 1 and 4. Further, i is between 0 and 2 and j and k, individually, are between 0 and 4. Further, h is 4 - i - j - k. The sum of h and i is between 0 and 2.

For example, $R^3$ is $-(CH_2)_\beta$, wherein $\beta$ is between 1 and 20 (i.e. h is 2, i is 0, j is 2, k is 0, and $\beta$ equals 2*$\psi$ + 1).

For example, $R^3$ is $C(C_2H_5)(CH_2OC(O)(CH_2)\sigma)_3-$ (i.e. h is 0, i is 1, j is 0, k is 3 and x is 2).

For example, $R^3$ is $C(CH_2OC(O)(CH_2)_\sigma)_4-$ (i.e. h is 0, i is 0, j is 0, k is 4 and x is 2).

The second polymaleimide units are according to formula (II)

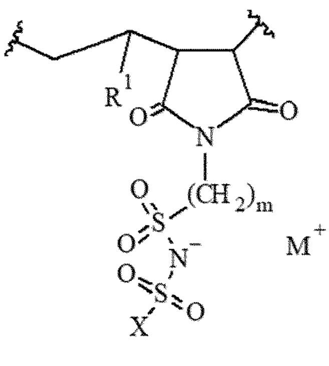

Formula II,

wherein

$R^1$ is H, $C_1$-$C_{16}$ alkyl, $C_2$-$C_{16}$ alkenyl or $C_2$-$C_{16}$ alkynyl;

m is 1 to 5;

$M^+$ is independently an alkali metal ion; and

X is H, F, $C_1$-$C_{16}$ alkyl, $C_1$-$C_{16}$ fluoroalkyl.

Advantageously, $R^1$ is H, $C_1$-$C_6$ alkyl, $C_2$-$C_6$ alkenyl or $C_2$-$C_6$ alkynyl, preferably H, $C_1$-$C_4$ alkyl, $C_2$-$C_4$ alkenyl or $C_2$-$C_4$ alkynyl. The alkyl, alkenyl and alkynyl can each be linear or branched.

Advantageously, X is H, F, $C_1$-$C_6$ alkyl or $C_1$-$C_6$ fluoroalkyl, preferably H, F, $CH_3$ or $CF_3$. The alkyl and fluoroalkyl can be linear or branched.

Advantageously, the alkali metal is lithium, sodium or potassium. In other words, the alkali metal ion advantageously is a lithium ion ($Li^+$), a sodium ion ($Na^+$), or a potassium ion ($K^+$).

A preferred example of the second polymaleimide repeat unit is a repeat unit according to formula IV:

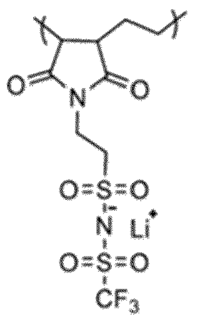

Formula IV,

wherein $R^1$ is H, m is 2, $M^+$ is $Li^+$ (lithium ion), X is $CF_3$.

A non-limiting example of the polymer electrolyte is given by formula V:

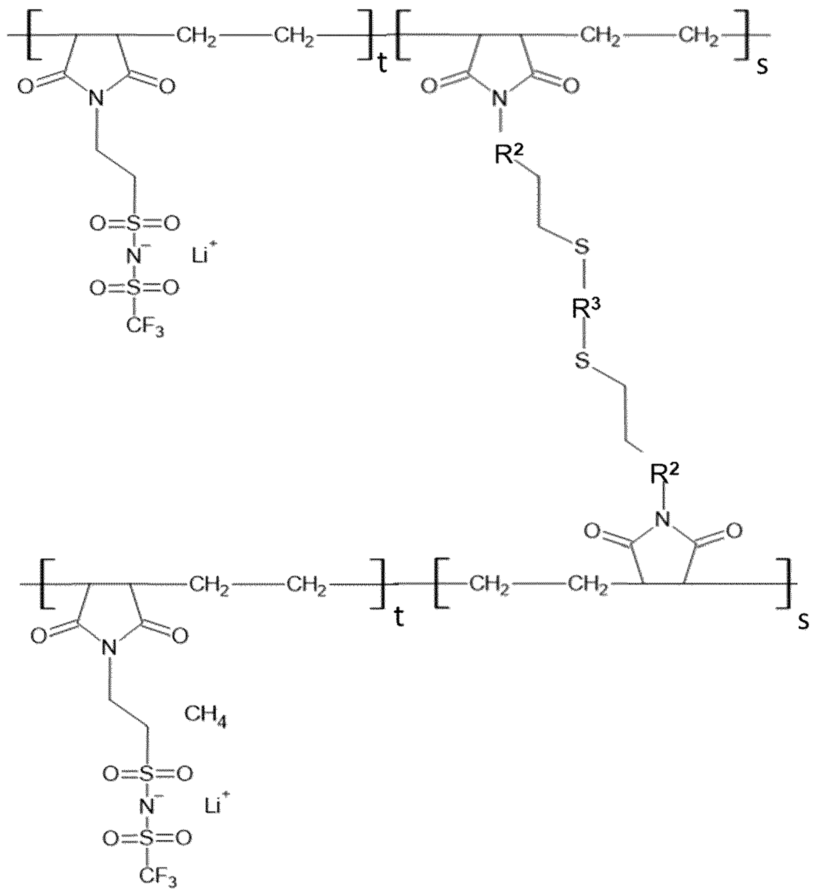

Formula V,

wherein

$R^1$ is H, m is 2, $M^+$ is $Li^+$ (lithium ion), X is $CF_3$,

$R^2$ is as described hereinabove, for example $CH_2$;

$R^3$ is as described hereinabove, wherein the sum of h and i is 2;

$R^4$ is H;

s, individually, is the number of first polymaleimide repeat units; and

t, individually, is the number of second polymaleimide repeat units.

Yet another non-limiting example of the polymer electrolyte is given by formula VI:

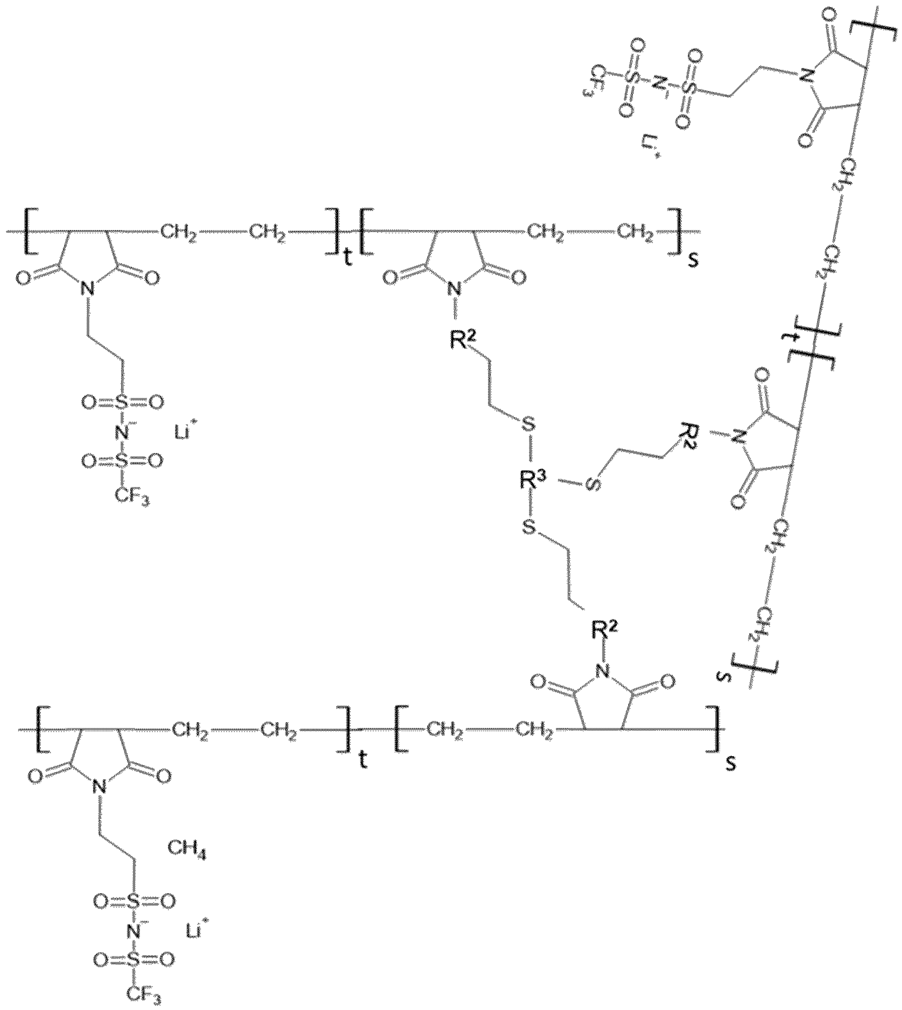

Formula VI,

wherein

$R^1$ is H, m is 2, $M^+$ is $Li^+$ (lithium ion), X is $CF_3$;

$R^2$ is as described hereinabove, for example $CH_2$;

$R^3$ is as described hereinabove, wherein the sum of h and i is 1;

$R^4$ is H;

s, individually, is the number of first polymaleimide repeat units; and

t, individually, is the number of second polymaleimide repeat units.

Yet another non-limiting example of the polymer electrolyte is given by formula VII:

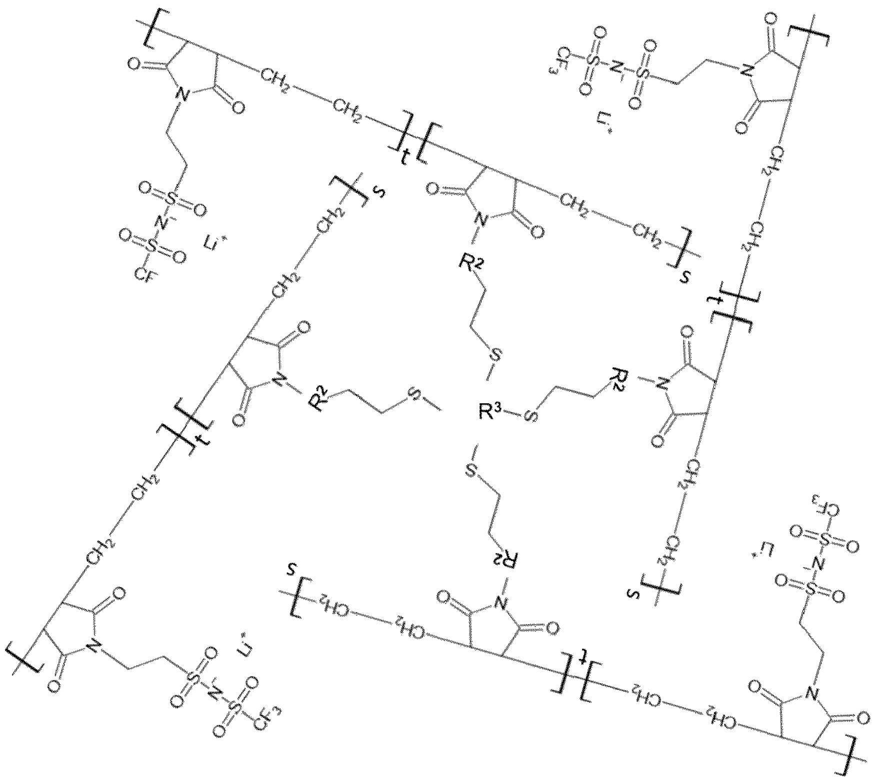

Formula VII,

wherein

$R^1$ is H, m is 2, $M^+$ is $Li^+$ (lithium ion), X is $CF_3$;

$R^2$ is as described hereinabove, for example $CH_2$;

$R^3$ is as described hereinabove, wherein h is 0 and i is 0;

$R^4$ is H;

s, individually, is the number of first polymaleimide repeat units; and

t, individually, is the number of second polymaleimide repeat units.

Advantageously, the polymer electrolyte is thermally stable up to at least 75 °C, preferably up to at least 100 °C, or up to temperatures up to at least 125 °C.

Advantageously, the polymer electrolyte has an ionic conductivity at 70 °C of at least 0.3 mS/cm, preferably at least 0.4 mS/cm, more preferably at least 0.5 mS/cm.

Advantageously, the polymer electrolyte has an ionic conductivity at 40 °C of at least 0.05 mS/cm, preferably at least 0.1 mS/cm, more preferably at least 0.15 mS/cm.

Advantageously, the polymer electrolytes of the present invention are self-standing. The terms "self-standing" and "self-supporting" are used interchangeably to indicate a film, substrate, product or article that has sufficient mechanical strength to be manipulated, such as being cut, shaped or handled, without the need for a carrier or a support onto which the film is placed to avoid damage thereto.

The polymer electrolyte of the present disclosure is advantageously manufactured (i.e. produced or prepared) by methods of the present disclosure.

In a first step, a compound is prepared. The compound comprises third polymaleimide repeat units, second polymaleimide repeat units, a thiol-ene reaction agent and a free radical initiator.

Optionally, the compound further comprises a plasticizing agent. Optionally, the compound further comprises a processing solvent.

The third polymaleimide repeat unit has a pendant vinyl group and is according to Formula III:

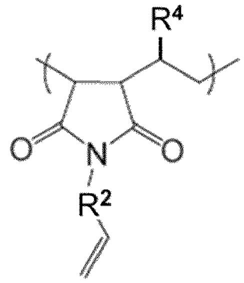

Formula III,

wherein $R^2$ and $R^4$ are advantageously as described hereinabove.

Advantageously, the number of third polymaleimide repeat units, *n,* is between 1 and 9500, preferably between 20 and 3750, more preferably between 100 and 1600.

The second polymaleimide repeat unit is according to Formula II. Advantageously, the number of second polymaleimide repeat units, *p*, is between 4 and 8000, preferably between 50 and 6000, more preferably between 250 and 3400.

The second and third polymaleimide repeat units are covalently bonded to one another, preferably via a carbon-carbon bond. In other words, the compound comprises a copolymer of the second and third polymaleimide repeat units.

A first example of the copolymer is given by formula VIII:

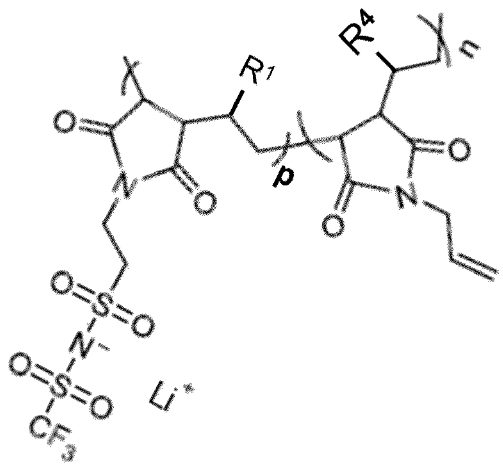

Formula VIII,

wherein $R^1$ is as hereinabove described, for example H, and wherein m is 2, $M^+$ is $Li^+$ (lithium ion), X is $CF_3$, $R^2$ is $CH_2$ and $R^4$ is as hereinabove described, for example H.

A second example of the copolymer is given by formula IX

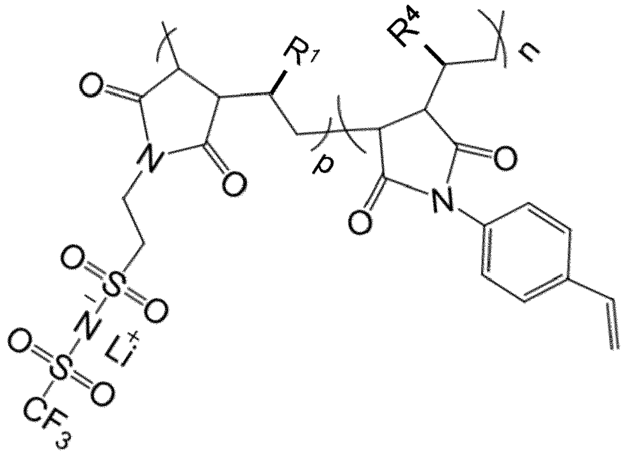

Formula IX,

wherein $R^1$ is as hereinabove described, for example H, and wherein m is 2, $M^+$ is $Li^+$ (lithium ion), X is $CF_3$, $R^2$ is benzyl and $R^4$ is as hereinabove described, for example H.

The thiol-ene reaction agent comprises thiol groups. The number of thiol groups, q, is at least two, such as two, three, four or more. Advantageously, the thiol-ene reaction agent is according to $R^3(SH)_\mu$, wherein $R^3$ and $\mu$ are as hereinabove described.

Non-limiting examples of the thiol-ene reaction agent include, without being limited thereto, compounds according to Formulas X (q = 2), XI (q = 2), XII (q = 3) and XIII (q = 4):

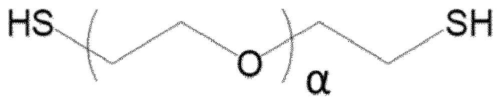

Formula X,

wherein $\alpha$ is between 1 and 10, preferably between 1 and 5, more preferably between 2 and 4, such as 2, 3 or 4,

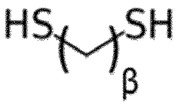

Formula XI,

wherein $\beta$ is between 1 and 20, preferably between 2 and 18, more preferably between 5 and 15, such as between 8 and 12, for example 10,

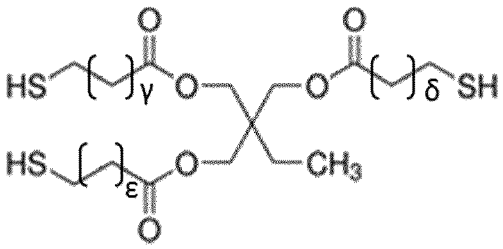

Formula XII,

wherein $\gamma$, $\delta$, and $\varepsilon$, individually, are between 0 and 19, preferably between 0 and 10, more preferably between 0 and 4, and

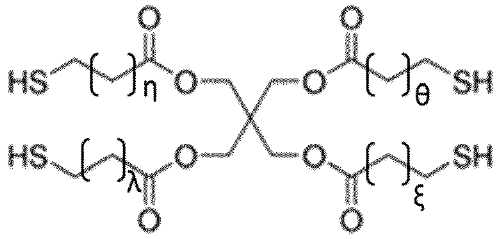

Formula XIII,

wherein η, θ, λ, and ξ, individually, are between 0 and 19, preferably between 0 and 10, more preferably between 0 and 4.

A preferred example of a free radical initiator is 2-Hydroxy-2-methylpropiophenone.

The inventors have found that the presence of a processing solvent in the compound is optional. Advantages of the processing solvent being optional is a reduced cost of the compound and the polymer electrolyte, a less complex process of producing the polymer electrolyte (i.e. less processing steps), no need for further (processing) solvent recuperation and recycling, and a reduced environmental impact.

However, depending on the exact composition of the compound, a processing solvent can be added to optimize its properties in view of conversion into a polymer electrolyte. Whether a processing solvent is added to the compound, depends thus on the type and amount of third and second polymaleimide repeat units, the thiol-ene reaction agent, the free radical initiator and the optional plasticizing agent.

When the compound comprises a processing solvent, the latter advantageously comprises or substantially consists of acetone, dimethylformamide, dimethyl sulfoxide, N-methyl-2-pyrrolidone, or a combination of two or more thereof.

When the compound comprises a plasticizing agent (i.e. a plasticizer), the plasticizing agent is advantageously selected from the group consisting of linear carbonates, cyclic carbonates, ethers, and nitriles. Particularly preferred examples of the plasticizing agent are propylene carbonate and ethylene carbonate. The compound can comprise two or more plasticizing agents, which are individually selected from the group consisting of linear carbonates, cyclic carbonates, ethers, and nitriles.

Optionally, the compound further comprises a crosslinking agent. Non-limited examples of crosslinking agents include polyethylene glycol diacrylate (PEGDA), trimethylolpropane triacrylate (TMPTA), pentaerythritol tetraacrylate (PETA), butyl acrylate (BA).

Optionally, the compound further comprises a metal salt. Advantageously, when the compound comprises a metal salt, the metal advantageously is lithium, sodium, magnesium or aluminium.

Advantageously, the compound comprises between 0 % and 10 % by weight of the metal salt, such as between 0.1 % and 7.5 % by weight, preferably between 0.2 % and 5 % by weight, more preferably between 0.5 % and 5 % by weight, based on the total weight of the compound minus the weight of the optional processing solvent.

Advantageously, the compound is applied to a substrate, thereby obtaining a film of the compound. Advantageously, the film has a thickness between 10 μm and 1000 μm, preferably between 20 μm and 750 μm, more preferably between 25 μm and 500 μm, such as between 50 μm and 250 μm. It is to be understood that the thickness can be varied based on the targeted or required thickness of the polymer electrolyte. Advantageously, the targeted or required thickness is determined based on the required total cell resistance and the required mechanical properties, such as mechanical strength and flexibility.

Advantageously, when the compound comprises a processing solvent, the processing solvent is removed after applying the compound to a substrate and prior to exposing the (substantially processing solvent-free) compound to one or more of UV radiation, IR radiation or a temperature up to 100°C.

Advantageously, the processing solvent is removed by heating the substrate comprising the compound to a temperature between 20 °C and 100 °C, preferably between 20 °C and 50 °C.

Advantageously, when the compound comprises a plasticizing agent, the substrate is heated to a temperature below the maximum continuous service temperature of the plasticizing agent, as defined by the Underwriter Laboratory (UL 746B) Relative Thermal Index (RTI), preferably to a temperature between 20 °C and $T_v$ - 10 °C, wherein $T_v$ is the maximum continuous service temperature of the plasticizing agent as defined by the Underwriter Laboratory (UL 746B) Relative Thermal Index (RTI). By doing so, evaporation and/or removal of the plasticizing agent will be avoided.

Alternatively or additionally, and advantageously, the processing solvent is removed by exposing the substrate comprising the compound to an atmosphere at a pressure below atmospheric pressure.

Advantageously, when a pressure below atmospheric pressure is applied, the pressure is 975 mbar or less, preferably 950 mbar or less, more preferably 930 mbar or less, for example 900 mbar or less, 750 mbar or less, or 500 mbar or less.

It will be understood that the optimal temperature and/or pressure for evaporating the processing solvent depend(s) on the composition of the compound. In particular, when the compound comprises a plasticizing agent, the

optimal conditions for evaporating the processing solvent depend on the plasticizing agent that is used, wherein the conditions are advantageously chosen to avoid evaporation or degradation of the plasticizing agent.

Preferably, the processing solvent is acetone. Acetone is particularly preferred because of its relatively low boiling point (i.e. 56 °C at atmospheric pressure) and its relatively high vapour pressure (i.e. 230 mm Hg at 25 °C). Its boiling point and vapour pressure allow removal thereof by heating to moderate temperatures, e.g. about 40 °C to 65 °C at atmospheric pressure, preferably 50 °C to 60 °C at atmospheric pressure, and/or at a pressure slightly below atmospheric pressure, e.g. about 950 mbar.

Advantageously, exposure of the (substantially processing solvent-free) compound to one or more of UV radiation, IR radiation or a temperature up to 100 °C initiates a thiol-ene reaction of the thiol-ene reaction agent and the third polymaleimide repeat units, thereby obtaining first polymaleimide repeat units according to formula I.

In other words, upon exposure to one or more of UV radiation, IR radiation or a temperature up to 100 °C, the (substantially processing solvent-free) compound is converted in a polymer electrolyte, in particular the polymer electrolyte of the present disclosure, comprising a polymaleimide copolymer as described hereinabove, i.e. comprising the second polymaleimide repeat units of formula II and the first polymaleimide repeat units of formula I.

Examples

*Example 1*

A compound was prepared comprising a polymaleimide copolymer comprising third polymaleimide repeat units according to formula III, wherein $R^2$ was $CH_2$, $R^4$ was H, and second polymaleimide repeat units according to Formula II, wherein $R^1$ was H, m was 2, $M^+$ was $Li^+$, X was $CF_3$.

The polymaleimide copolymer was prepared by first reacting allylamine with

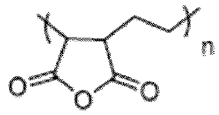

,

wherein n is as described hereinabove, in the presence of dimethylformamide (DMF), for 4 hours at room temperature. The resulting copolymer was then reacted with

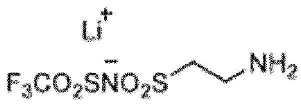

for 20 hours at room temperature, followed by heating the reaction product at 50 °C for 4 hours and refluxing the resulting product at 170 °C for 16 hours.

The compound further comprised a thiol-ene reaction agent according to Formula XIII.

The compound further comprised propylene carbonate having a molecular weight of 102 Da as plasticizing agent, 2-Hydroxy-2-methylpropiophenone having a molecular weight of 164 Da as free radical initiator, and acetone as processing solvent.

The acetone-comprising compound was then applied to a Teflon substrate by solvent casting, followed by removal of the acetone by placing the Teflon substrate comprising the compound in an argon box, thereby supplying a flow of argon at room temperature and at atmospheric pressure for 24h to the substrates.

Next, the substantially processing solvent-free compound was exposed to UV radiation, which incited a thiol-ene reaction, thereby leading to a polymer electrolyte film having a thickness of 150-200 μm. The film was self-standing.

*Example 2*

Two compounds comprising the same components, but in different amounts, were prepared. Table 1 shows the % by weight of each component for both compounds. For each compound, $\frac{a*q}{n}$ was 1, wherein n is the number of third polymaleimide repeating units, q the number of thiol groups, and a the number of thiol-ene reaction agent molecules.

The compounds comprised third polymaleimide repeat units according to formula III, wherein $R^2$ is $CH_2$. The third polymaleimide repeat unit (*"3rd"* in Table 1) had a molecular weight between 152 kDa.

The compounds comprised second polymaleimide repeat units *("2nd"* in Table 1) according to Formula II, wherein $R^1$ was H, m was 2, $M^+$ was $Li^+$, X was $CF_3$, and the molecular weight for this repeating unit was 357 kDa.

The thiol-ene reaction agent ("*4SH*" in Table 1) comprised 4 thiol groups and was according to Formula XIII, wherein $\eta$, $\theta$, $\lambda$, and $\xi$ were 1 and the molecular weight is 489 Da.

The plasticizing agent (*"PC"* in Table 1) was propylene carbonate having a molecular weight of 102 Da, and the free radical initiator (*"Ini"* in Table 1) was 2-Hydroxy-2-methylpropiophenone having a molecular weight of 164 Da.

*Table 1: compound composition expressed in % by weight based on the total weight of the compound minus the weight of acetone as processing solvent*

| Compound No. | 3rd | 2nd | 4SH | PC | Ini |
|---|---|---|---|---|---|
| 1 | 3.7 | 33.6 | 2.6 | 59.9 | 0.1 |
| 2 | 7.0 | 28.0 | 4.9 | 59.9 | 0.2 |

Acetone as processing solvent was added to the two compounds of Table 1 in an amount so that the compounds comprised 86 % by weight of acetone, based on the total weight of the compound including the weight of the acetone. The acetone-comprising compounds were then applied to a Teflon substrate by casting, more particularly solvent casting.

The acetone was removed by placing the Teflon substrates comprising the compounds in an argon box, thereby supplying a flow of argon at room temperature and at atmospheric pressure for 24h to the substrates.

Next, the substantially solvent-free compounds were exposed to UV radiation, which incited a thiol-ene reaction, thereby leading to polymer electrolyte films having a thickness of 150-200 $\mu$m. The films were self-standing. In other words, they have sufficient mechanical strength to be manipulated without the further need of the Teflon substrate as supporting material (see Fig. 1).

Four reference polymer electrolytes were prepared as well.

The first reference electrolyte was prepared from a compound comprising a second polymaleimide polymer comprising second polymaleimide repeat units according to Formula II, wherein $R^1$ was H, m was 2, $M^+$ was $Li^+$, X was $CF_3$, and the average number molecular weight was between 250 kDa and 1500 kDa.

The compound for the first reference electrolyte further comprised the same plasticizing agent as the two inventive compounds, as well as polyethylene glycol diacrylate (PEGDA, number average molecular weight 700 g/mol) as crosslinking agent, and a polyvinylidenedifluoride-hexafluoropropylene copolymer (PVdF-HFP) as mechanical support. The reference compound was then polymerized by means of radical polymerization. The resulting polymer electrolyte comprised 7.3 % by weight of the second polymaleimide polymer, 5 % by weight of the PVdF-HFP copolymer, 17.6 % by weight of PEGDA, and 70.1 % by weight of plasticizing agent, based on the total weight of the electrolyte.

Three further reference electrolytes comprised the second polymaleimide polymer of the first reference electrolyte and polyethylene glycol dimethyl ether - Mw 500 (PEGDME) as plasticizer in a 5M polyethylene oxide (PEO) powder in acetonitrile solution. All three had a ratio of ethylene oxide units to lithium ions of 20, and a weight ratio of PEO to PEGDME of 20/80, 30/70 and 40/60, respectively.

*Example 3*

The ionic conductivity of the two polymer electrolytes, as well as of the four reference polymer electrolytes (all as prepared in Example 1) and of 100% polyethylene oxide (PEO) as benchmark was measured by alternating current (AC) impedance spectroscopy using a BT lab potentiostat (Bio-Logic Science Instruments). The measurements were performed in the frequency range from 10 kHz to 0.1 Hz at a temperature varying between 25 °C and 70 °C. The ionic conductivity is a measure for the suitability of the polymer electrolyte to be used in a battery cell.

Fig. 2A shows the Arrhenius plot of the ionic conductivity (in S/cm) for the two polymer electrolytes of the invention. Fig. 2B shows the Arrhenius plot of the ionic conductivity for the first reference electrolyte. Fig. 2C shows the Arrhenius plot of the ionic conductivity for the second to fourth reference electrolytes (samples 20/80, 30/70 and 40/60) together with the PEO benchmark (sample 100/0), respectively.

From Fig. 2B and Fig. 2C it is clear that all four reference electrolytes showed decent to good ionic conductivity values, whereas the values for a 100% PEO sample are very low and below acceptable, which was as expected. The ionic conductivity values of the four reference electrolytes varied between 2 * $10^{-7}$ S/cm and 1.5 * $10^{-5}$ S/cm at 25 °C, and between 2 * $10^{-5}$ S/cm and 4 * $10^{-5}$ S/cm at 70 °C.

Both inventive electrolytes (Fig. 2A) showed high ionic conductivities, which were at every temperature up to several orders of magnitude higher than the ionic conductivity of the reference electrolytes at that temperature. Ionic conductivity values for the inventive electrolytes varied between 0.8 * $10^{-5}$ S/cm and $10^{-4}$ S/cm at 25 °C, and between 4 * $10^{-4}$ S/cm and 5 * $10^{-4}$ S/cm at 70 °C.

*Example 4*

The lithium transference number and the lithium conductivity were measured for the polymer electrolytes of Example 2, as well as for the four reference polymer electrolytes. The Li transference number was measured by a combined measurement of AC impedance and DC polarization method described in "Electrochemical measurement of transference numbers in polymer electrolytes", Evans et al., Polymer Volume 28, Issue 13 (1987), 2324-2328. A lithium symmetric cell was used to this end, having as electrolyte the polymer electrolytes. The temperature of the cell was controlled by a temperature chamber at 70 °C. The lithium transference number was calculated by the Equation 1

$$T_{\mathrm{Li}}{}^{+} = \frac{I_S R_b^s \, (\Delta V - I_0 R_i^0)}{I_0 R_b^0 \, (\Delta V - I_S R_i^S)} \qquad \text{Equation 1,}$$

wherein

$I_0$ and $I_s$ are the respective initial and steady-state currents,
$R_{bo}$ and $R_{bs}$ are the respective initial and final resistances of the bulk electrolytes,
$R_{io}$ and $R_{is}$ are the respective initial and final resistances of the interfacial layers of the Li° electrode/electrolyte, and
$\Delta V$ is the applied DC voltage.

The Li conductivity was calculated by multiplying the total ionic conductivity of the electrolytes and the lithium transference number. The lithium transference number is defined as the ratio of the electric current derived from the lithium cation of the polymer electrolyte to the total electric current. A lithium transference number close to 1 implies that the ion conducting performance in the polymer electrolyte is mainly accomplished by the lithium cation. Table 2 gives the calculated lithium transference number for the two polymer electrolytes of the invention and for the four reference electrolytes that were tested.

*Table 2: calculated lithium transference number*

| Compound No. | Li transference number |
|---|---|
| 1 | 0.82 ± 0.06 |
| 2 | 0.80 ± 0.10 |
| Reference 1 (PVdF-HFP) | 0.83 ± 0.10 |
| Reference 2 (20/80) | 0.96 |
| Reference 3 (30/70) | 0.93 |
| Reference 4 (40/60) | 0.95 |

It follows from Table 2 that the two polymer electrolytes according to the invention and the reference electrolytes show a high lithium transference number, for values of at least 0.5 are considered high in the technical field.

The lithium conductivity is a measure for the conductivity realised by the lithium cation. In other words, a higher lithium transference number implies a smaller difference between the ionic conductivity (measured in Example 2) and the lithium conductivity.

The mechanical stability was also tested for the polymer electrolytes obtained from compounds Nos. 1 and 2 of Example 2 by measuring the elongation at break. The polymer electrolytes obtained from compound Nos. 1 and 2 had an elongation at break of 328.59 ± 70.82 % and 342.02 ± 7.900 %, respectively, whereas the reference polymer electrolyte only had an elongation at break of 42.13 %, i.e. one order of magnitude lower. This improved elongation at break indicates a more flexible and less brittle electrolyte. A more flexible electrolyte is capable of better accommodating any volume changes during cycling (repeated charging/discharging of a battery comprising the electrolyte), as well as the tensile deformation applied during processing of the electrolyte and the battery.

*Example 5*

The thermal stability of the two inventive polymer electrolytes of Example 2 was tested by measuring the mass loss during thermogravimetry analysis (TGA), using a thermogravimetric analyser. TGA was performed at a heating rate of 10 °C/min with an argon flow of 0 mL/min. Both inventive electrolytes showed an initial mass loss at 150 °C ascribed to the

evaporation of the plasticizing agent, resulting in the polymer decomposition being shifted to 350 °C (Fig. 3). In other words, the polymer electrolytes of the present invention have an excellent thermal stability for temperatures up to at least 120 °C.

The electrochemical anodic stability was tested by means of a linear sweep voltammetry in a VMP3 potentiostat at 40 °C. A two-electrode set-up was used, using a lithium foil as reference electrode and counter electrode. To this end, CR2032 type coin cells were prepared, having a lithium foil as reference and counter electrode and stainless steel as working electrode. The polymer electrolytes used in the coin cells were the electrolytes obtained from compounds Nos. 1 and 2 of Example 2. All other components of a CR2032 type coin cell were as typically used in the field. The coin cells were assembled in an argon glovebox.

The linear sweep voltammetry was carried out from the open circuit voltage (OCV) up to 6.0 V vs. $Li^+/Li$ at a scan rate of 1 mV/s.

Fig. 4A and Fig. 4B show the current density in function of the potential as measured for the coin cells comprising the polymer electrolyte obtained from compound Nos. 1 and 2, respectively. It was noticed that for both polymer electrolytes of the invention the first oxidation onset of the system took place around 4.0 V, being the main oxidation at which means that for battery applications the polymer electrolytes can be used in combination with, or coupled with, active materials that work at voltages up to 4.0 V.

A critical current density test was also performed, using a VMP3 potentiostat. To this end, two CR2032 type coin cells were prepared, each having a lithium foil as cathode and as anode (i.e. symmetrical coin cells). As electrolyte, the polymer electrolyte obtained from compounds 1 and 2 was used (one electrolyte per coin cell). All other components of a CR2032 type coin cell were as typically used. The coin cells were assembled in an argon glovebox.

The critical current density test was performed by galvanostatically cycling the coin cells with a variable current density from 0.1 $mA/cm^2$ to 5 $mA/cm^2$, while keeping the total capacity constant at 1.0 $mAh/cm^2$.

Figs. 5A and 5B show the voltage in function of the capacity as measured for the coin cell comprising the polymer electrolyte obtained from compound Nos. 1 and 2, wherein the measurement was performed at 40 °C, respectively. Stable profiles were observed up to a current density of C/3 = 0.33 $mA/cm^2$ at 40 °C.

Further CR2032 type symmetrical coin cells with the polymer electrolyte obtained from compounds Nos. 1 and 2 (one electrolyte per coin cell) were tested by repeated charging/discharging (cyclic testing) at a constant current density of 0.33 $mA/cm^2$ at 40 °C, while keeping the total capacity constant at 1.0 $mAh/cm^2$.

Fig. 6A and Fig. 6B show the voltage in function of the time as measured for the coin cell comprising the polymer electrolyte obtained from compound Nos. 1 and 2, respectively. It is clear from Fig. 6A and Fig. 6B that both battery cells showed a stable cycling without any sign of short circuiting for more than 600 hours.

*Example 6*

A lithium metal battery cell was assembled using the polymer electrolyte obtained from compound No. 2 in Example 2. The cathode comprised 80 % by weight of $LiFePO_4$ (LFP), 10 % of weight of binder material, and 10 % by weight of carbon black, based on the total weight of the cathode. The active material loading was so that the theoretical capacity of the battery cell was close to 1 $mAh/cm^2$. It is known that the voltage window for LFP is between 2.7 V and 3.8 V. The anode was a copper foil coated with lithium metal having 0.3 wt.% aluminium doping.

The lithium metal battery cell was tested by repeated charging/discharging cycles, at 40 °C proving a stable capacity retention and a 100% coulombic efficiency for up to 40 cycles (Fig. 7).

## Claims

**1.** Polymer electrolyte for a battery cell comprising a polymaleimide copolymer comprising

- first polymaleimide repeat units according to $R^3(Q)_\mu$,
wherein

$R^3$, individually, is $C(H)_h(C_xH_{2x+1})_i((CH_2)_\psi)_j(CH_2OC(O)(CH_2)_\sigma)_k$ or a polyether,
wherein i is between 0 and 2; j and k, individually, are between 0 and 4; h is 4 - i - j - k; the sum of h and i is between 0 and 2; x is between 1 and 6; $\psi$ is between 1 and 10; and $\sigma$ is between 1 and 20;
$\mu$, individually, is at least 2, preferably between 2 and 4; and
Q, individually, is according to formula (I):

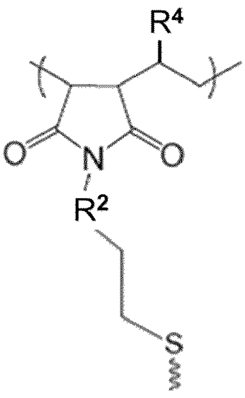

Formula I,

wherein
$R^2$, individually, is $C_1$-$C_{16}$ alkyl, $C_2$-$C_{16}$ alkenyl, $C_2$-$C_{16}$ alkynyl or aryl;
$R^4$, individually, is H, $C_1$-$C_{16}$ alkyl, $C_2$-$C_{16}$ alkenyl, $C_2$-$C_{16}$ alkynyl; and
Q is covalently bound to $R^3$ via the sulphur atom of Q;

- second polymaleimide repeat units according to formula (II)

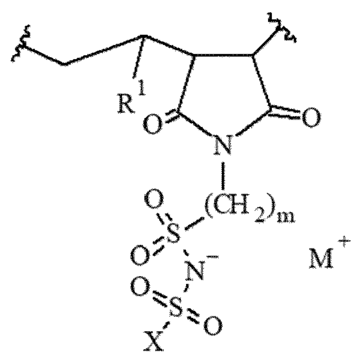

Formula II

wherein

$R^1$, individually, is H, $C_1$-$C_{16}$ alkyl, $C_2$-$C_{16}$ alkenyl, $C_2$-$C_{16}$ alkynyl;
m, individually, is 1 to 5;
$M^+$ is independently an alkali metal ion; and
X, individually, is H, F, $C_1$-$C_{16}$ alkyl, $C_1$-$C_{16}$ fluoroalkyl,
wherein the first polymaleimide repeat units and the second polymaleimide repeat units are covalently bonded to one another.

**2.** Polymer electrolyte according to claim 1, wherein the molar ratio of the first polymaleimide repeat units to the second polymaleimide repeat units is between 5 and 95, preferably between 20 and 50.

**3.** Polymer electrolyte according to any one of the preceding claims, wherein R2 is methyl, ethyl, propyl, n-butyl, iso-butyl, benzyl, or styryl.

**4.** Polymer electrolyte according to any one of the preceding claims, wherein the alkali metal ion is a lithium ion.

**5.** Polymer electrolyte according to any one of the preceding claims, wherein X is CF3, CH3 or F.

**6.** Polymer electrolyte according to any one of the preceding claims, wherein $R^3$ is a polyether according to $-(CH_2)_\omega(O(CH_2)_\varsigma)_\alpha-$, wherein $\omega$ is between 0 and 4, $\varsigma$ is between 1 and 4, and $\alpha$ is between 1 and 10.

**7.** Polymer electrolyte according to any one of the preceding claims, wherein $R^3$ is $-(CH_2)_\beta-$, $C(CH_2CH_3)(CH_2OC(O)(CH_2)_\sigma)_3-$ or $C(CH_2OC(O)(CH_2)_\sigma)_4-$, wherein $\beta$ is between 1 and 20 and $\sigma$ is between 1 and 20.

**8.** Polymer electrolyte according to any one of the preceding claims, further comprising between 0.5 % and 90 % by weight, preferably between 30 % and 80 % by weight of a plasticizing agent, based on the total weight of the polymer electrolyte.

**9.** Polymer electrolyte according to claim 8, wherein the plasticizing agent is selected from the group consisting of linear carbonates, cyclic carbonates, ethers, and nitriles.

**10.** Battery cell comprising the polymer electrolyte according to any one of the preceding claims.

**11.** Method for producing a polymer electrolyte for a battery cell, wherein the polymer electrolyte comprises a polymaleimide copolymer, the method comprising:

- preparing a compound comprising

◦ third polymaleimide repeat units according to formula (III)

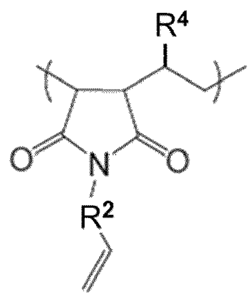

Formula III,

wherein $R^2$, individually, is $C_1$-$C_{16}$ alkyl, $C_2$-$C_{16}$ alkenyl, $C_2$-$C_{16}$ alkynyl or aryl; and $R^4$, individually, is H, $C_1$-$C_{16}$ alkyl, $C_2$-$C_{16}$ alkenyl, $C_2$-$C_{16}$ alkynyl;

◦ second polymaleimide repeat units according to formula (II);
◦ a thiol-ene reaction agent comprising q thiol groups, wherein q is at least 2;
◦ a free radical initiator; and
◦ optionally a processing solvent;

wherein the third polymaleimide repeat units and the second polymaleimide repeat units are covalently bonded to one another;
- applying the compound to a substrate;
- when the compound comprises a processing solvent, removing the processing solvent, thereby obtaining a substantially processing solvent-free compound; and
- initiate a thiol-ene reaction of the thiol-ene reaction agent and the third polymaleimide repeat units by exposing the (substantially processing solvent-free) compound to one or more of UV radiation, IR radiation or a temperature up to 100 °C, thereby obtaining the polymer electrolyte,

**characterized in that** 0.5 $0.5 \leq \frac{a*q}{n} \leq 2,$ , wherein a is the number of thiol-ene reaction agent molecules and n is the number of third polymaleimide repeat units in the compound.

**12.** Method according to claim 11, wherein the compound further comprises a plasticizing agent.

**13.** Method according to any one of claims 11 to 12, wherein the compound comprises between 0 % and 80 % by weight of plasticizing agent, between 15 % and 70 % by weight of the compound and between 0.05 % and 1.5 % by weight of the free radical initiator, based on the total weight of the compound minus the weight of the optional processing solvent.

**14.** Method according to any one of claims 11 to 13, wherein the optional processing solvent comprises acetone, dimethylformamide, dimethyl sulfoxide, N-Methyl-2-pyrrolidone, or a combination of two or more thereof.

**15.** Method according to any one of claims 11 to 14, wherein the compound comprises between 0 % and 95 % by weight, preferably between 10 % and 90 % by weight, of processing solvent, based on the total weight of the compound including the weight of the processing solvent.

Fig. 1

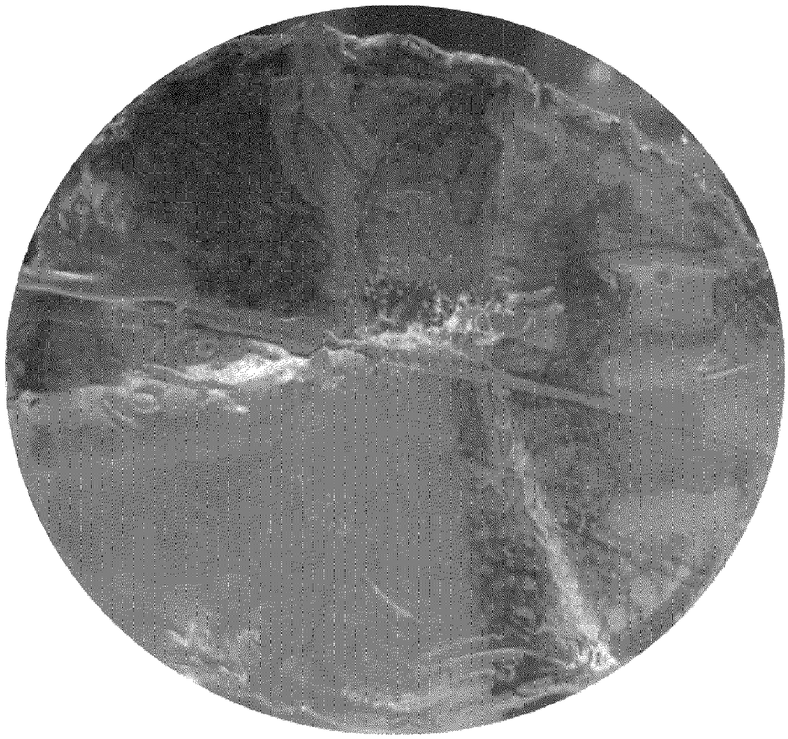

Fig. 2A

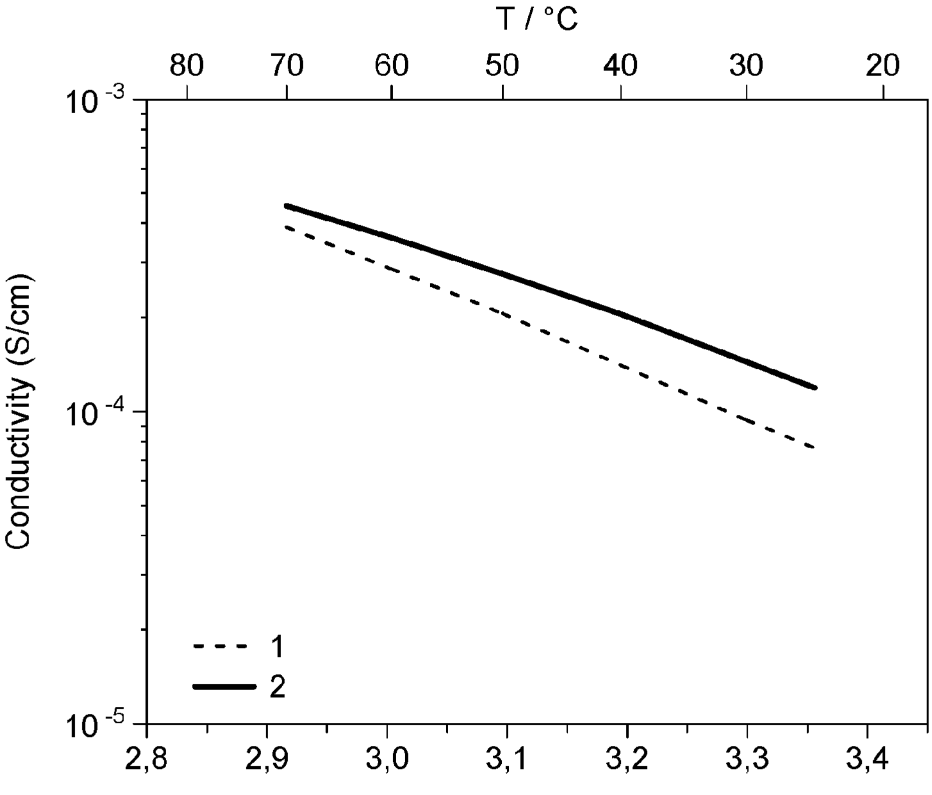
T / °C
80
70
60
50
40
30
20
$10^{-3}$
$10^{-4}$
$10^{-5}$
Conductivity (S/cm)
1
2
2,8
2,9
3,0
3,1
3,2
3,3
3,4

Fig. 2B

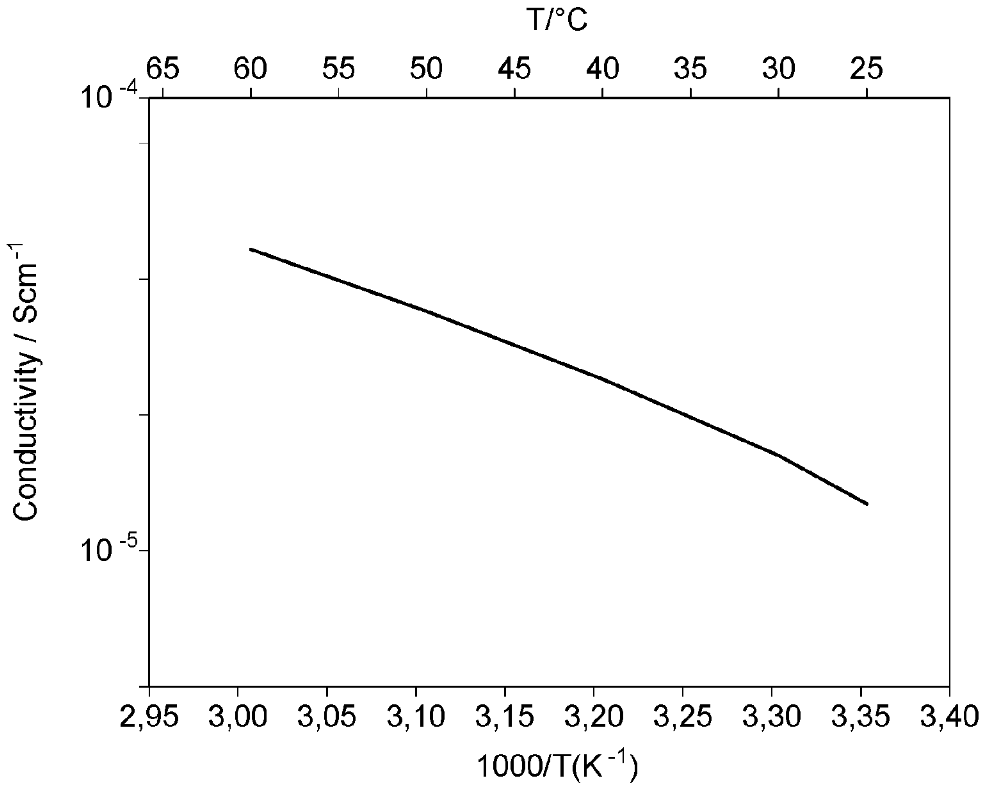
T/°C
65
60
55
50
45
40
35
30
25
10 -4
10 -5
Conductivity / Scm-1
2,95
3,00
3,05
3,10
3,15
3,20
3,25
3,30
3,35
3,40
1000/T(K -1)

Fig. 2C

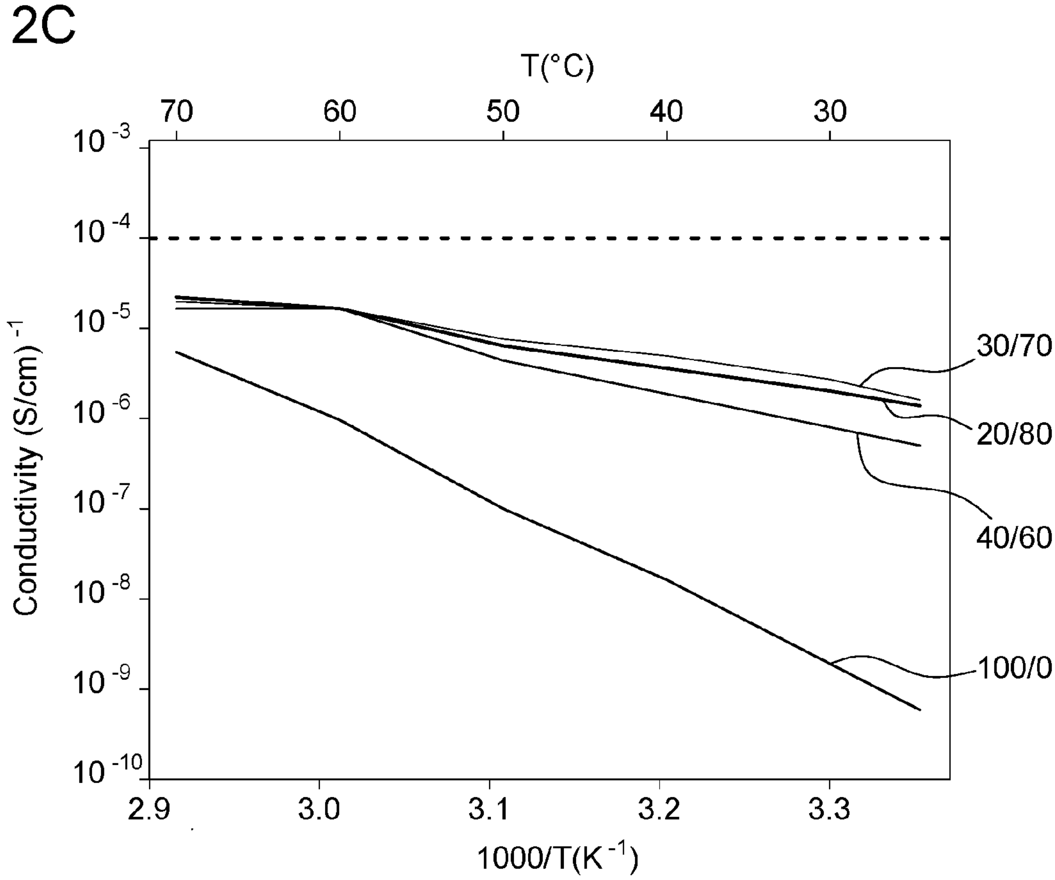
T(°C)
70
60
50
40
30
10 -3
10 -4
10 -5
10 -6
10 -7
10 -8
10 -9
10 -10
Conductivity (S/cm) -1
30/70
20/80
40/60
100/0
2.9
3.0
3.1
3.2
3.3
1000/T(K -1)

Fig. 3

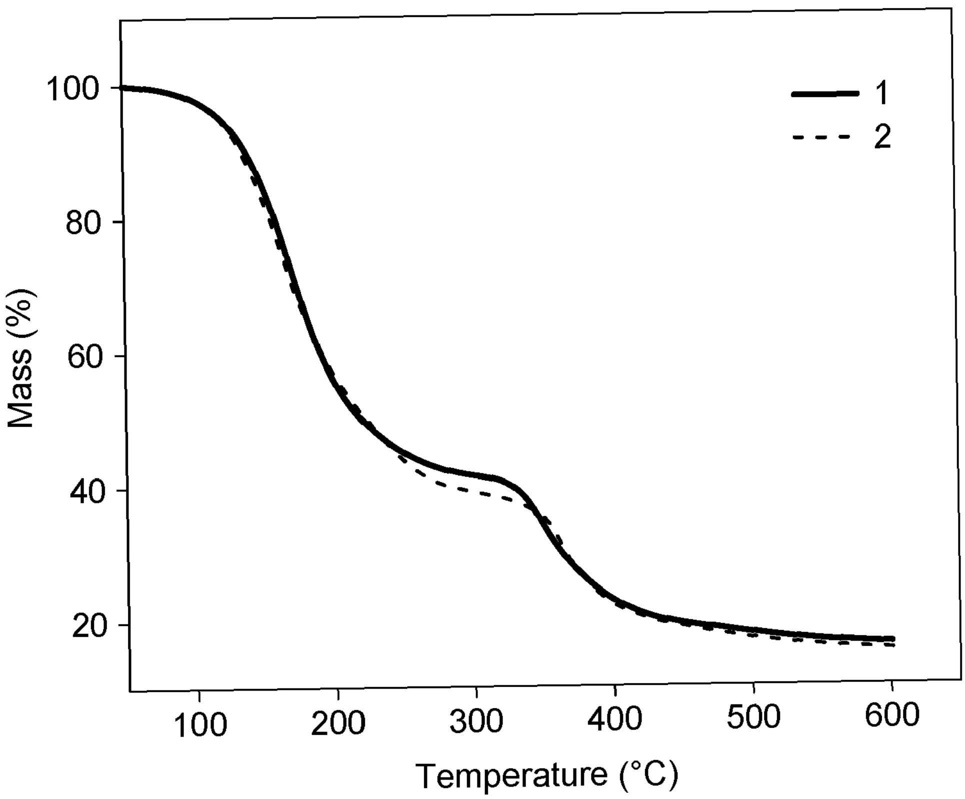

Fig. 4A

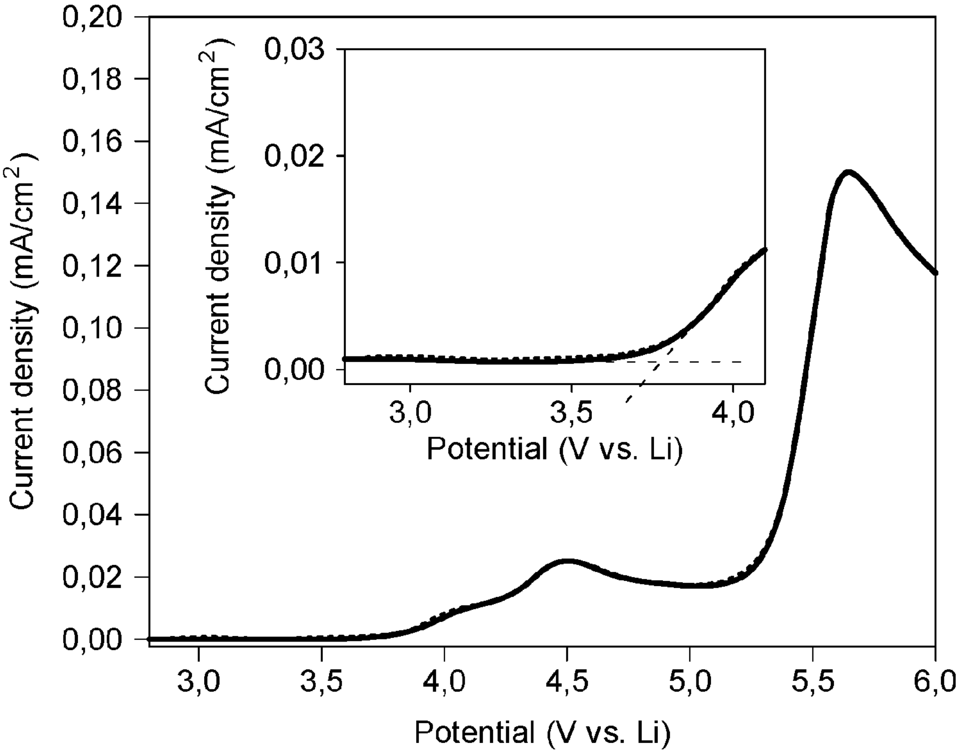
0,20
0,18
0,16
0,14
0,12
0,10
0,08
0,06
0,04
0,02
0,00
Current density (mA/cm2)
3,0
3,5
4,0
4,5
5,0
5,5
6,0
Potential (V vs. Li)
0,03
0,02
0,01
0,00
Current density (mA/cm2)
3,0
3,5
4,0
Potential (V vs. Li)

Fig. 4B

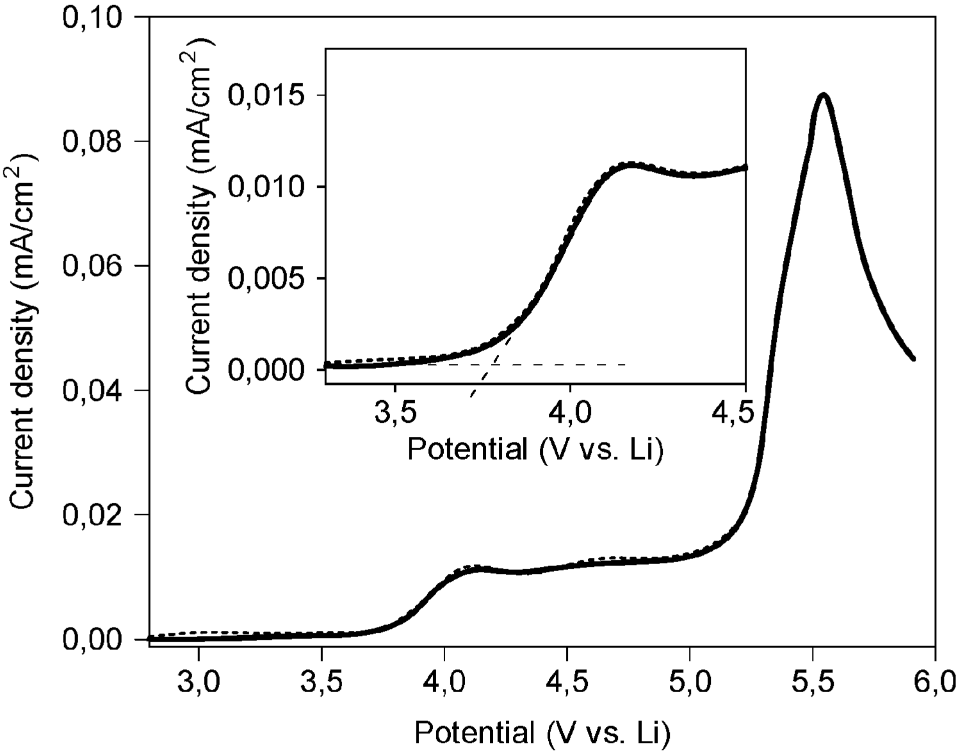
0,10
0,08
0,06
0,04
0,02
0,00
Current density (mA/cm2)
3,0
3,5
4,0
4,5
5,0
5,5
6,0
Potential (V vs. Li)
0,015
0,010
0,005
0,000
Current density (mA/cm2)
3,5
4,0
4,5
Potential (V vs. Li)

Fig. 5A

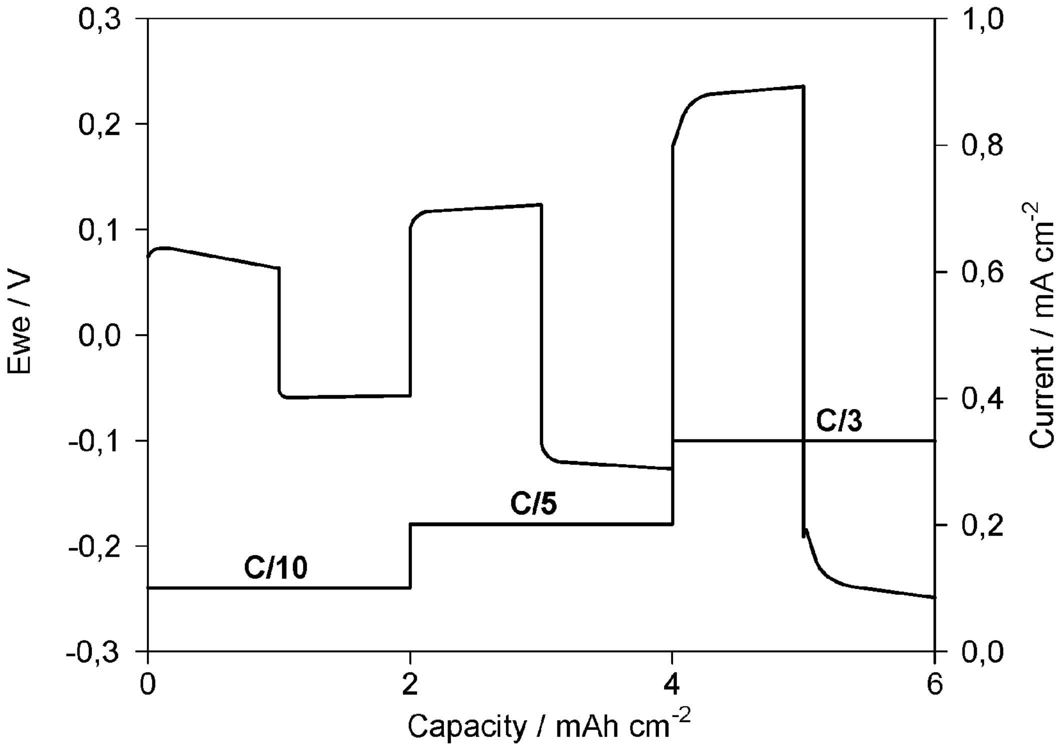
0,3
0,2
0,1
0,0
-0,1
-0,2
-0,3
Ewe / V
1,0
0,8
0,6
0,4
0,2
0,0
Current / mA cm-2
0
2
4
6
Capacity / mAh cm-2
C/10
C/5
C/3

Fig. 5B

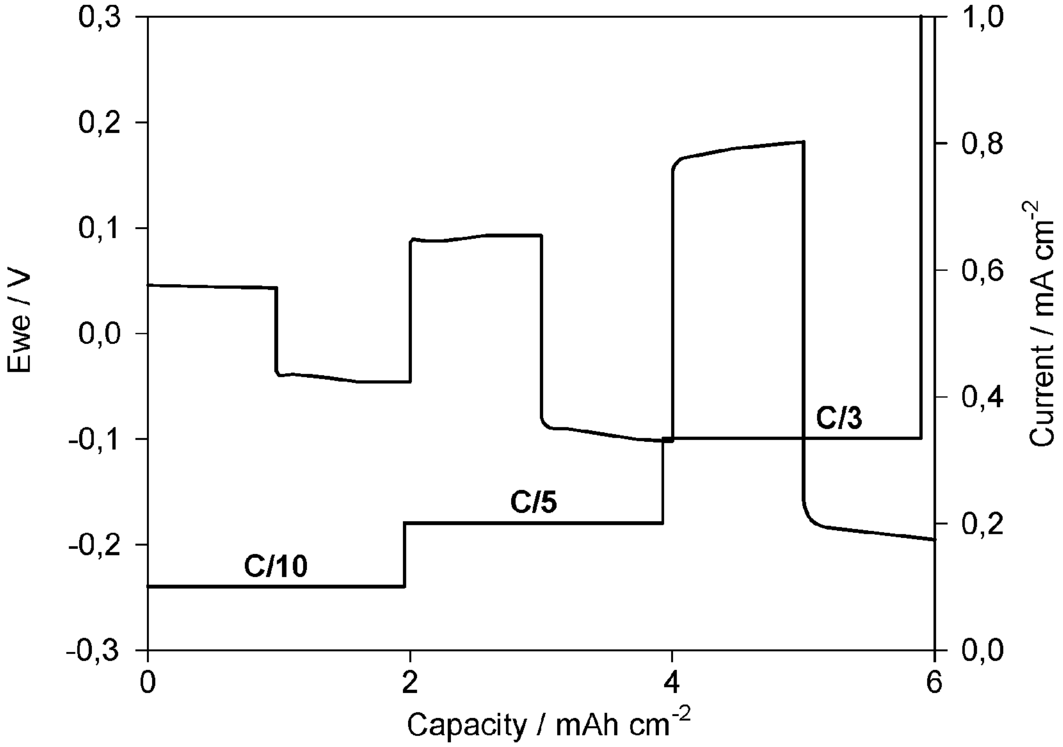
0,3
0,2
0,1
0,0
-0,1
-0,2
-0,3
Ewe / V
1,0
0,8
0,6
0,4
0,2
0,0
Current / mA cm-2
0
2
4
6
Capacity / mAh cm-2
C/10
C/5
C/3

Fig. 6A

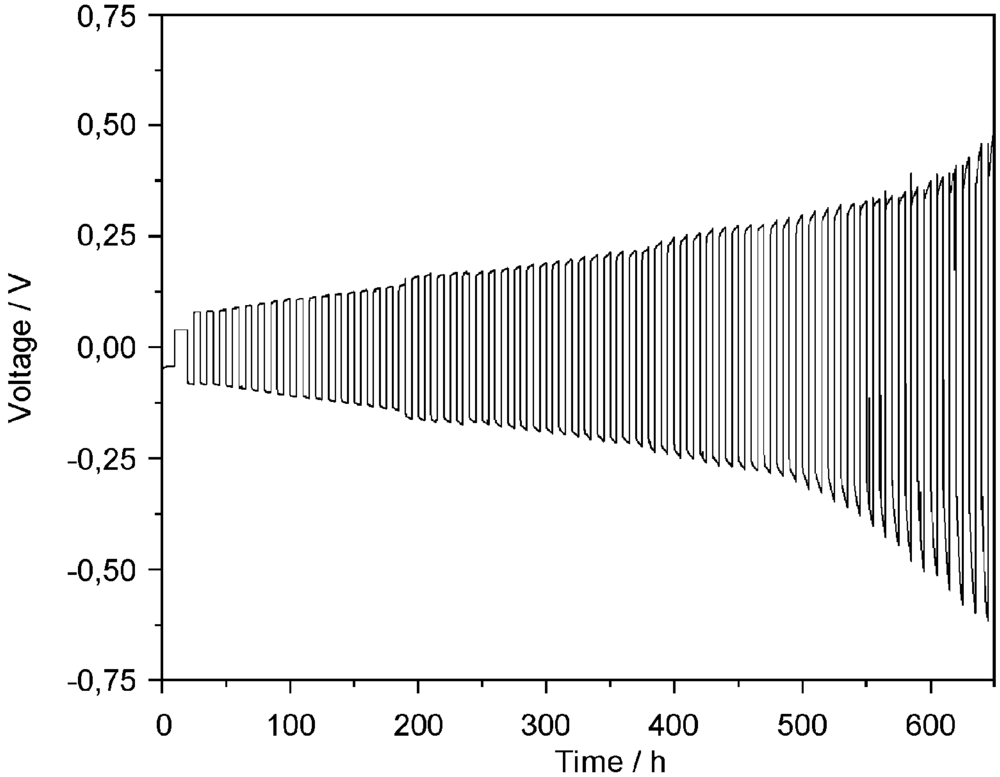
0,75
0,50
0,25
0,00
-0,25
-0,50
-0,75
Voltage / V
0
100
200
300
400
500
600
Time / h

Fig. 6B

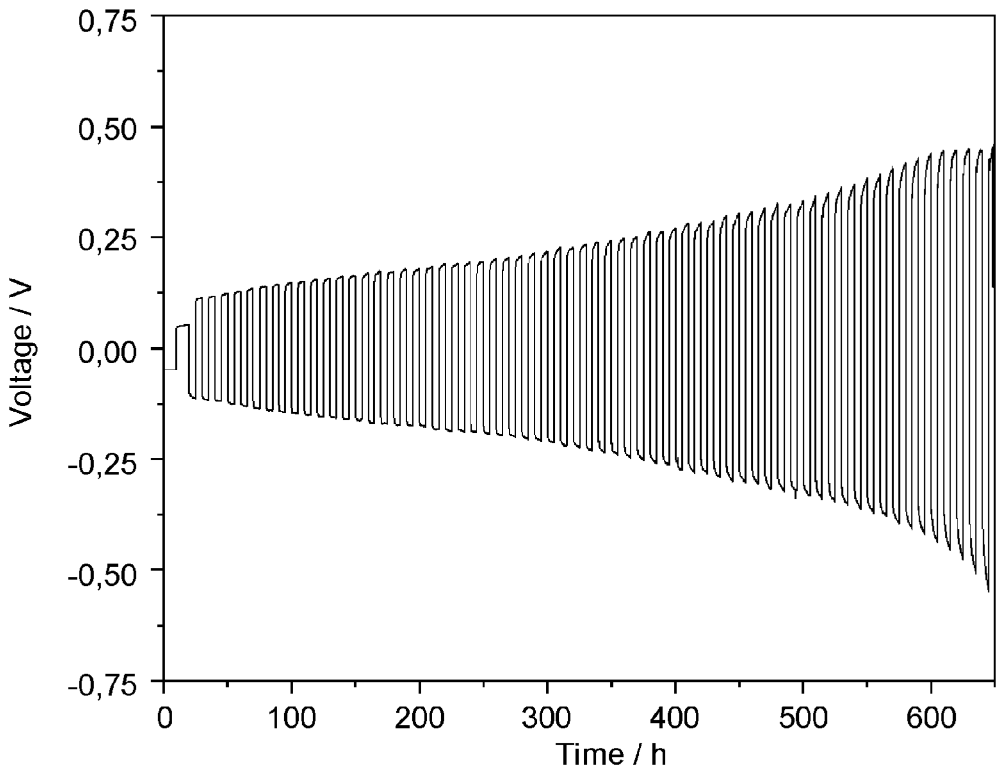
0,75
0,50
0,25
0,00
-0,25
-0,50
-0,75
Voltage / V
0
100
200
300
400
500
600
Time / h

Fig. 7

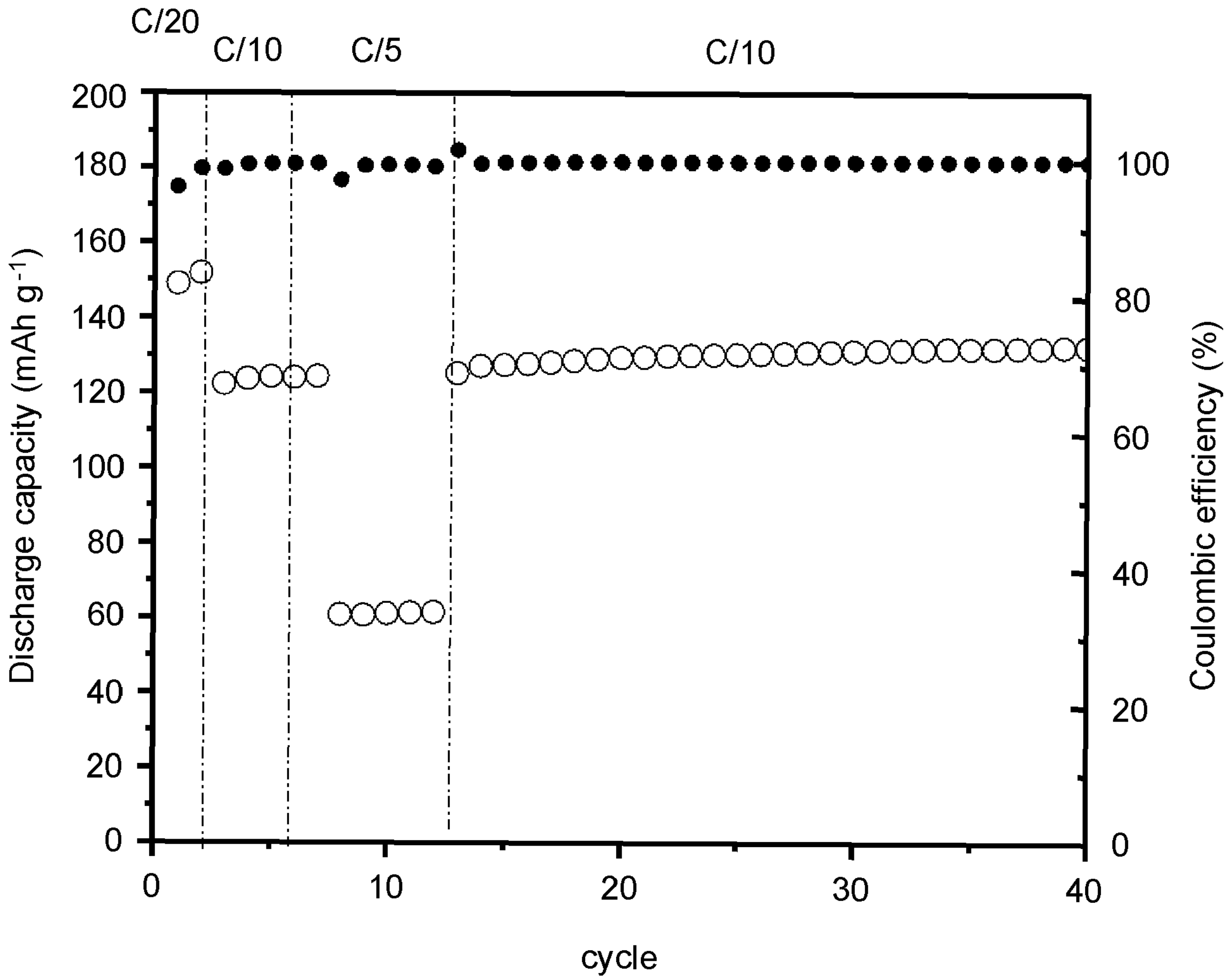
C/20
C/10
C/5
C/10
Discharge capacity (mAh g-1)
Coulombic efficiency (%)
cycle
0
20
40
60
80
100
120
140
160
180
200
10
30

Europäisches Patentamt
European Patent Office
Office européen des brevets

# EUROPEAN SEARCH REPORT

Application Number
EP 23 21 9802

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A,D | US 2023/096123 A1 (JOHNSON HILLIS E N [US] ET AL) 30 March 2023 (2023-03-30)<br>* claim 1 *<br>----- | 1-15 | INV.<br>C08L35/00<br>C08F8/32<br>C08F8/34 |
| A,D | US 2023/246232 A1 (AHN KYOUNG HO [KR] ET AL) 3 August 2023 (2023-08-03)<br>* claims 1,11 *<br>----- | 1-15 | |
| A | US 2014/212728 A1 (KANEDA TAKUYA [JP] ET AL) 31 July 2014 (2014-07-31)<br>* claim 1 *<br>----- | 1-15 | |

TECHNICAL FIELDS SEARCHED (IPC)

C08L
C08F
C08K

The present search report has been drawn up for all claims

1

| Place of search | Date of completion of the search | Examiner |
|---|---|---|
| The Hague | 4 June 2024 | Flores de Paco, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO. EP 23 21 9802

This annex lists the patent family members relating to the patent documents cited in the above-mentioned European search report. The members are as contained in the European Patent Office EDP file on
The European Patent Office is in no way liable for these particulars which are merely given for the purpose of information.

04-06-2024

| Patent document cited in search report | Publication date | Patent family member(s) | Publication date |
|---|---|---|---|
| US 2023096123 A1 | 30-03-2023 | US 2023096123 A1 | 30-03-2023 |
| | | WO 2021174186 A2 | 02-09-2021 |
| US 2023246232 A1 | 03-08-2023 | US 2023246232 A1 | 03-08-2023 |
| | | WO 2022055307 A1 | 17-03-2022 |
| US 2014212728 A1 | 31-07-2014 | CN 103797613 A | 14-05-2014 |
| | | EP 2755256 A1 | 16-07-2014 |
| | | JP 6024663 B2 | 16-11-2016 |
| | | JP WO2013035795 A1 | 23-03-2015 |
| | | KR 20140068944 A | 09-06-2014 |
| | | US 2014212728 A1 | 31-07-2014 |
| | | WO 2013035795 A1 | 14-03-2013 |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2022055307 A
- US 2023096123 A


### Non-patent literature cited in the description


- **EVANS et al.** Electrochemical measurement of transference numbers in polymer electrolytes. *Polymer*, 1987, vol. 28 (13), 2324-2328